# EUROPÄISCHE PATENTSCHRIFT

(11) **EP 2 678 392 B1**
(45) Veröffentlichungstag und Bekanntmachung des Hinweises auf die Patenterteilung: **01.04.2015**
(21) Anmeldenummer: 12706013.5
(22) Anmeldetag: 17.02.2012
(51) Int. Cl.: C08L 83/04

(54) **SELBSTHAFTENDE, ZU ELASTOMEREN VERNETZBARE SILICONZUSAMMENSETZUNGEN**
SELF-ADHESIVE SILICONE COMPOSITIONS CROSSLINKABLE TO ELASTOMERS
COMPOSITIONS DE SILICIUM AUTO-ADHÉSIVES, RÉTICULABLES EN ÉLASTOMÈRES

(30) Priorität: 25.02.2011 DE 102011004789
(43) Veröffentlichungstag der Anmeldung: 01.01.2014
(73) Patentinhaber: Wacker Chemie AG, 81737 München (DE)
(72) Erfinder: OCHS, Christian, 84489 Burghausen (DE)
(74) Vertreter: Budczinski, Angelika
(86) Internationale Anmeldenummer: PCT/EP2012/052730
(87) Internationale Veröffentlichungsnummer: WO 2012/113717

(56) Entgegenhaltungen:
- DE-A1- 2 433 697

## Beschreibung

Die vorliegende Erfindung bezieht sich auf selbsthaftende, zu Elastomeren vernetzbare Siliconzusammensetzungen sowie deren Anwendung. Die Erfindung schließt Siliconelastomere und Materialverbunde, die aus den erfindungsgemäßen selbsthaftenden additionsvernetzenden Siliconzusammensetzungen hergestellt werden, mit ein.

Es ist bekannt, dass platinvernetzende Siliconkautschukformulierungen, die mit gängigen Substratmaterialien wie Gläsern, Metallen oder organischen Kunststoffen in Kontakt gebracht und anschließend vulkanisiert werden, über eine nur geringe bis keine Haftfestigkeit verfügen, so dass das erhaltene Siliconelastomer in der Regel unter Anwendung relativ geringer Zugkräfte von dem betreffenden Substratmaterial wieder delaminiert werden kann.

Aus der Literatur sind zahlreiche Technologien bekannt, um eine feste und dauerhafte Verbindung zwischen einem Siliconelastomer und einem Substratmaterial herzustellen.

Grundsätzlich besteht die Möglichkeit einer Modifizierung der chemischen und physikalischen Beschaffenheit des Substratmaterials, um die Haftfestigkeit zwischen dem Siliconelastomer und dem Substratmaterial zu verbessern. Ein beispielhaftes Verfahren stellt die Vorbehandlung der Oberfläche der Substratmaterialien durch Beflammung, Corona-, Plasma- oder Pyrosil^{®}-Behandlung dar. Bei derartigen Vorbehandlungsschritten wird die Oberfläche bzw. oberflächennahe Schicht des Substratmaterials physikalisch oder chemisch aktiviert, d.h. es werden funktionelle Gruppen geschaffen, welche das Zustandekommen einer Verbindung ermöglichen und auf diese Weise zur Realisierung eines dauerhaft stabilen Hart-Weich-Materialverbundes aus Siliconelastomer und Substratmaterial beitragen.

Ein anderer Weg der Herstellung von dauerhaft festen Materialverbunden stellt die Aufbringung von Grundierungen, sog. Primern, auf das Substratmaterial dar. Derartige Grundierungen enthalten neben haftvermittelnden Additiven auch Lösungsmittel, welche nach dem Aufbringen der Grundierung auf das Substratmaterial wieder entfernt werden müssen.

Eine weitere Möglichkeit der Herstellung dauerhaft fester Verbundmaterialien stellt die Bereitstellung von geeigneten funktionellen Gruppen im Volumen bzw. an der Oberfläche des Substratmaterials dar, welche bei Vulkanisation der additionsvernetzenden Siliconzusammensetzungen einen Beitrag zum Haftungsaufbau liefern. Hierzu sei beispielsweise auf EP-A 601 882 und EP-A 143 994 verwiesen.

Ein entscheidender Nachteil der beschriebenen Technologien ist darin zu sehen, dass wenigstens ein zusätzlicher Verfahrensschritt zur Vorbehandlung oder Herstellung der Substratmaterialien notwendig ist, was wiederum aufgrund der vergleichsweise geringen Produktivität und der damit verbundenen höheren Prozesskosten grundsätzlich unerwünscht ist.

Daher wurden in der Vergangenheit zahlreiche Ansätze vorgestellt, wie bei additionsvernetzenden Siliconzusammensetzungen durch Verwendung von ein oder mehreren speziellen Haftvermittleradditiven und/oder speziellen Vernetzern eine Verbesserung der Haftung auf verschiedenen Substraten bewirkt werden kann. Diese den unvernetzten Zusammensetzungen beigemischten Additive bewirken typischerweise während der Vulkanisation unter Temperatureinfluss bzw. nach der Vulkanisation - ggf. auch erst nach Lagerung - einen Haftungsaufbau mit einem Substratmaterial. Beispiele hierfür sind exemplarisch in WO-A 09/037156 und in der dort zitierten, weiterführenden Literatur zu finden.

Die Verwendung dieser speziellen Haftvermittleradditive bzw. speziellen Vernetzer ist jedoch aus mehreren Gründen von Nachteil.

Die vielfach zum Haftungsaufbau eingesetzten organofunktionellen Alkoxysilane/-siloxane spalten während der Vulkanisation Alkohol ab. Bevorzugt werden aus Reaktivitätsgründen typischerweise Methoxysilanderivate, welche das als giftig eingestufte Methanol freisetzen. Mit dem Freiwerden von flüchtigen Spaltprodukten (Alkoholabspaltung) wird auch eine nicht unerhebliche Schrumpfung des Siliconelastomers beobachtet, die in der Regel unerwünscht ist. Der abgespaltene Alkohol kann weiterhin abträglich für eine gute Haftung sein, da der Alkohol sich an der Oberfläche des Silicons anreichert und damit auch an der Grenzfläche zum Substrat, wodurch der Kontakt zwischen Silicon- und Substratoberfläche verschlechtert wird. Zudem besteht im Falle der funktionellen Alkoxysilane die Gefahr von "Ausblühungen" und des "Ausschwitzens".

Weiterhin ist bekannt, dass der Zusatz bestimmter Haftvermittleradditive die Rheologie von Siliconzusammensetzungen negativ beeinflussen kann. Typische Effekte sind ein Verdicken bis zur Standfestigkeit oder gar ein völliges Verstrammen der unvulkanisierten Formulierungen, was deren Anwendungstauglichkeit - insbesondere für Beschichtungs-, Gieß- oder Vergussprozesse - deutlich einschränken kann.

Oftmals wirken die verwendeten Haftvermittleradditive nur unter dem Einfluss von Temperatur, so dass eine bestimmte Mindestvulkanisationtemperatur eingehalten werden muss. Dies schmälert jedoch die Einsatzmöglichkeiten der betreffenden Siliconzusammensetzungen, insbesondere wenn industriellen Klebe- oder Laminationsprozesse auf eine Verarbeitung bei Raumtemperatur angewiesen sind.

Aufgrund ihrer chemischen Konstitution sind die verwendeten Additive oder Vernetzer mit den restlichen Bestandteilen der Siliconzusammensetzung geringfügig unverträglich und reichern sich so während der Vulkanisation an der Phasengrenzfläche Silicon/Substrat an. Mit dieser durchaus gewünschten, intrinsischen Microphasenseparation geht jedoch einher, dass die betreffenden Siliconzusammensetzungen nicht klar transparent, sondern milchig trüb bis opak sind. Hochtransparente, selbsthaftende Siliconelastomerzusammensetzungen sind auf diesem Wege nicht zugänglich.

Manche der angegebenen Additive können aufgrund ihrer relativ hohen Reaktivität einen beschleunigten SiH-Abbau herbeiführen, die Vernetzungsgeschwindigkeit deutlich herabsetzen oder gar zu (irreversiblen) Inhibierungseffekten führen. Zudem ist in vielen Fällen die lagerstabile Herstellung mancher, sehr spezieller Haftvermittler oder Haftvermittlerpolymere sehr aufwendig und daher kostenintensiv, was sich letztlich in einer verminderten Wirtschaftlichkeit niederschlägt.

DE 24 33 697 A1 offenbart eine zu Elastomeren vernetzbare Siliconzusammensetzung enthaltend Diorganopolysiloxane mit vinylenthaltenden Endgruppen, Organopolysiloxane mit Organowasserstoffsiloxaneinheiten, Katalysator und vorzugsweise Diorganopolysiloxane mit zwei endständigen Diorganowasserstoffsiloxaneinheiten.

Gegenstand der Erfindung sind zu Elastomeren vernetzbare Siliconzusammensetzungen enthaltend
(1) Organosiliciumverbindungen, die SiC-gebundene Reste mit aliphatischen Kohlenstoff-Kohlenstoff-Mehrfachbindungen aufweisen, enthaltend Einheiten der Formel

   RₐR¹_{b}SiO_{(4-a-b)/2} (I)

   ,
   wobei
   R gleich oder verschieden sein kann und gegebenenfalls substituierter, SiC-gebundener, aliphatisch gesättigter Kohlenwasserstoffrest bedeutet,
   R¹ gleich oder verschieden sein kann und gegebenenfalls substituierter, SiC-gebundener, aliphatisch ungesättigter Kohlenwasserstoffrest bedeutet,
   a 0, 1, 2 oder 3 ist und
   b 0, 1, 2 oder 3 ist,
   mit der Maßgabe, dass die Summe a+b kleiner oder gleich 3 beträgt und mindestens zwei Reste R¹ pro Molekül vorhanden sind,
(2) Organopolysiloxane mit Si-gebundenen Wasserstoffatomen enthaltend Einheiten der Formel

   R²_{c}H_{d}SiO_{(4-c-d)/2} (II)

   wobei
   R² gleich oder verschieden sein kann und eine oben für R angegebene Bedeutung hat,
   c 0, 1, 2 oder 3 ist und
   d 0, 1 oder 2, bevorzugt 0 oder 1, ist,
   mit der Maßgabe, dass die Summe von c+d kleiner oder gleich 3 ist und durchschnittlich mindestens drei Einheiten der Formel (II) mit c=d=1 je Molekül vorliegen, wobei der Gehalt an Si-gebundenem Wasserstoff größer oder gleich 0,7 Gew.-% ist,
(3) im Wesentlichen lineare Organopolysiloxane mit endständig Si-gebundenen Wasserstoffatomen und
(4) die Anlagerung von Si-gebundenem Wasserstoff an aliphatische Mehrfachbindung fördernden Katalysator,
mit der Maßgabe, dass das molare Verhältnis von Si-gebundenem Wasserstoff stammend aus Komponente (3) und bezogen auf 100 Gewichtsteile erfindungsgemäße Zusammensetzung, zur Summe des Si-gebundenen Wasserstoffes stammend aus den Komponenten (2) und (3), jeweils bezogen auf 100 Gewichtsteile erfindungsgemäße Zusammensetzung, zwischen 0,05 und 1 liegt.

Im Rahmen der vorliegenden Erfindung sollen von dem Begriff Organopolysiloxane sowohl polymere, oligomere wie auch dimere Siloxane mitumfasst werden, bei denen ein Teil der Siliciumatome auch durch andere Gruppen als Sauerstoff, wie etwa -C-, miteinander verbunden sein können.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Beispiele für substituierte Reste R sind mit Halogenatomen substituierte Kohlenwasserstoffreste.

Bevorzugt handelt es sich bei Rest R um Reste mit 1 bis 18 Kohlenstoffatomen, besonders bevorzugt um solche mit 1 bis 8 Kohlenstoffatomen, insbesondere um den Methylrest.

Vorzugsweise handelt es sich bei Rest R¹ um aliphatische Mehrfachbindung aufweisende Kohlenwasserstoffreste mit 2 bis 18 Kohlenstoffatomen, wie Vinyl-, Allyl-, Methallyl-, 2-propenyl-, 3-Butenyl-, 4-Pentenylrest, 5-Hexenyl-, Butadienyl-, Hexadienyl-, Cyclopentenyl-, Cyclopentadienyl-, Cyclohexenyl-, Ethinyl-, Propargyl- und 2-Propinylrest, wobei solche Reste R¹ mit 2 bis 6 Kohlenstoffatomen besonders bevorzugt sind, insbesondere der Vinyl- und Allylrest.

Bei den erfindungsgemäß eingesetzten Organosiliciumverbindungen (1) kann es sich um alle aliphatisch ungesättigten Organosiliciumverbindungen handeln, die auch bisher in durch Hydrosilylierung vernetzbaren Massen eingesetzt worden sind.

Bei den erfindungsgemäß eingesetzten Organosiliciumverbindungen (1) kann es sich um lineare, verzweigte oder cyclische Siloxane handeln.

Bevorzugt handelt es sich bei den Organosiliciumverbindungen (1) um im Wesentlichen lineare Organopolysiloxane der Struktur

(R¹R₂SiO_{1/2}) (R¹RSiO) ₀₋₅₀ (R₂SiO) ₀₋₂₀₀₀ (R¹R₂SiO_{1/2}),

wobei R und R¹ die oben genannte Bedeutung haben.

Obwohl in der obigen Formel nicht angegeben, können die erfindungsgemäß eingesetzten linearen Siloxane (1) herstellungsbedingt einen molaren Anteil von Verzweigungen, d.h. T- und/oder Q-Einheiten, von bis zu 1%, bevorzugt bis zu 1000 ppm, aufweisen.

Beispiele für lineare Organosiliciumverbindungen (1) sind
(ViMe₂SiO_{1/2}) (ViMe₂SiO_{1/2}),
(ViMe₂SiO_{1/2}) (Me₂SiO_{1/2}), (ViMe₂SiO_{1/2}),
(ViMe₂SiO_{1/2}) (Me₂SiO)₁₆₀ (ViMe₂SiO_{1/2}),
(ViMe₂SiO_{1/2}) (Me₂SiO)₂₁₀ (ViMe₂SiO_{1/2}),
(ViMe₂SiO_{1/2}) (Me₂SiO) ₄₄₀ (ViMe₂SiO_{1/2}),
(ViMe₂SiO_{1/2}) (Me₂SiO) ₆₂₀ (ViMe₂SiO_{1/2}),
(ViMe₂SiO_{1/2}) (Me₂SiO) ₁₀₅₀ (ViMe₂SiO_{1/2}),
(ViMe₂SiO_{1/2}) (Me₂SiO)₁₇₅₀(ViMe₂SiO_{1/2}),
(ViMe₂SiO_{1/2}) (Me₂SiO) ₁₁₀ (ViMeSiO) _{0,5} (ViMe₂SiO_{1/2}),
(ViMe₂SiO_{1/2}) (Me₂SiO) ₁₇₅ (ViMeSiO) ₄₄ (ViMe₂SiO_{1/2}),
(ViMe₂SiO_{1/2}) (Me₂SiO) ₆₀₈ (ViMeSiO) ₁₂ (ViMe₂SiO_{1/2}).
wobei Me gleich Methyl- und Vi gleich Vinylrest bedeutet.

Die erfindungsgemäß eingesetzten linearen Organosiliciumverbindungen (1) besitzen vorzugsweise eine Viskosität von 0,5 bis 10⁶ mPas, besonders bevorzugt 0,5 bis 500 000 mPas, insbesondere 0,5 bis 100 000 mPas, jeweils bei 25°C.

Des Weiteren bevorzugt als Organosiliciumverbindungen (1) sind auch Organopolysiloxanharze, wie z.B. solche, in denen in mindestens 35%, bevorzugt mindestens 50%, der Einheiten der Formel (1) die Summe a+b gleich 0 oder 1, besonders bevorzugt gleich 0, ist.

Die erfindungsgemäß eingesetzten Organopolysiloxanharze (1) können zusätzlich zu den Einheiten der Formel (I) noch Siloxy-Einheiten (I') mit Si-gebundenen Resten -OR' aufweisen mit R' gleich Wasserstoffatom oder einwertiger, gegebenenfalls substituierter Kohlenwasserstoffrest, beispielsweise Si-gebundene Hydroxy- und Alkoxygruppen, wie etwa Methoxy, Ethoxy- oder Butoxyreste. Bei den Siloxy-Einheiten (I') kann es sich um sog. M-, D-, T- oder Q-Einheiten handeln, die noch zusätzlich Reste R und/oder R¹ aufweisen können mit R und R¹ gleich einer der obengenannten Bedeutungen.

Die erfindungsgemäß eingesetzten Organopolysiloxanharze (1) weisen, insbesondere herstellungsbedingt, einen Anteil an Si-gebundenen Resten -OR' mit R' gleich der obengenannten Bedeutung von bevorzugt insgesamt < 10 Gew.-%, besonders bevorzugt 0,01 bis 5 Gew.-%, auf.

Die erfindungsgemäß eingesetzten Organopolysiloxanharze (1) haben gewichtsmittlere Molekulargewichte M_{w} von bevorzugt 1 000 bis 100 000 g/mol, besonders bevorzugt 1 500 bis 10 000 g/mol und können bei 25°C und dem Druck der umgebenden Atmosphäre, also 900 bis 1100 hPa, flüssig oder fest sein.

Falls die erfindungsgemäß eingesetzten Organopolysiloxanharze (1) flüssig sind, haben sie eine Viskosität von bevorzugt 20 bis 1 000 000 mPas, besonders bevorzugt 20 bis 500 000 mPas, jeweils bei 25°C.

Falls die erfindungsgemäß eingesetzten Organopolysiloxanharze fest sind, haben sie eine Erweichungstemperatur von bevorzugt > 30°C, besonders bevorzugt > 40°C, und bei 23°C eine Dichte im Bereich von 0,95 bis 2,5 g/cm³, jeweils beim Druck der umgebenden Atmosphäre, also 900 bis 1100 hPa.

Beispiele für Organopolysiloxanharze (1) sind mit Allyl- oder Vinylgruppen funktionalisierte Silsesquioxane sowie mit Allyl- oder Vinylgruppen funktionalisierte sog. MQ-Harze, die beispielsweise im Wesentlichen aus Einheiten der Formeln (CH₃)₃SiO_{1/2}-, R¹(CH₃)₂SiO_{1/2}- und SiO_{4/2}- sowie gegebenenfalls zusätzlich (R'O)₃SiO_{1/2}-, (R'O)₂SiO_{2/2}- und (R'O)SiO_{3/2}- zusammengesetzt sind, wobei der molare Anteil der M-Einheiten (CH₃)₃SiO_{1/2}-und R¹(CH₃)₂SiO_{1/2}- 35 bis 65 mol-% bzw. der molare Anteil der Q-Einheit SiO_{4/2}- sowie gegebenenfalls (R'O)₃SiO_{1/2}-, (R'O)₂SiO_{2/2}-und (R'O)SiO_{3/2}- 35 bis 65 mol-% beträgt, wobei R¹ Vinyl- oder Allylrest bedeutet.

Handelt es sich bei Organosiliciumverbindungen (1) um Organopolysiloxanharze, so sind solche, die im Wesentlichen aus M-Einheiten, vorzugsweise R¹R₂SiO_{1/2}- und R₃SiO_{1/2}-, und Q-Einheiten, also SiO_{4/2}- bestehen und mindestens 50% aller Einheiten im Harz Q-Einheiten darstellen, bevorzugt, wobei mit Vinyldimethylsiloxygruppen funktionalisierte MQ-Harze bevorzugt und mit Vinyldimethylsiloxygruppen funktionalisierte MQ-Harze, bei denen der molare Anteil der M-Einheiten ((CH₃)₃SiO_{1/2}- und R¹(CH₃)₂SiO_{1/2}-) 35 bis 50 mol-% bzw. der molare Anteil der Q-Einheiten (SiO_{4/2}- sowie gegebenenfalls zusätzlich (R'O)₃SiO_{1/2}-, (R'O)₂SiO_{2/2}- und (R'O)SiO_{3/2}-) 50 bis 65 mol-% beträgt und die einen herstellungsbedingten Anteil an Si-gebundenen Resten OR' von unter 5 Gew.-% aufweisen, besonders bevorzugt sind.

Bei den erfindungsgemäß eingesetzten Organosiliciumverbindungen (1) handelt es sich bevorzugt um solche, die aus Einheiten der Formel (I) sowie gegebenenfalls (I') bestehen.

Der Gehalt an aliphatisch ungesättigten Kohlenwasserstoffresten in den erfindungsgemäß eingesetzten Organosiliciumverbindungen (1) beträgt bevorzugt 0,001 bis 1,3 mol Reste R¹, besonders bevorzugt 0,003 bis 1,3 mol, insbesondere 0,004 bis 1,3 mol, jeweils bezogen auf 100 g Komponente (1).

Bei den linearen Siloxanen (1) variiert dieser mit der Kettenlänge und liegt bevorzugt zwischen 0,001 und 1,3 mol Reste R¹, besonders bevorzugt 0,003 bis 1,3 mol, insbesondere 0,004 bis 1,3 mol, jeweils bezogen auf 100 g Komponente (1).

Bei den Organopolysiloxanharzen (1) liegt dieser im Bereich von bevorzugt 0,001 bis 1,0 mol Reste R¹, besonders bevorzugt 0,01 bis 0,6 mol, insbesondere 0,02 bis 0,1 mol, jeweils bezogen auf 100 g Komponente (1).

Bevorzugt handelt es sich bei Komponente (1) um im Wesentlichen lineare Siloxane oder um im Wesentlichen lineare Siloxane im Gemisch mit Organopolysiloxanharz, wobei es sich bei Komponente (1) besonders bevorzugt um ein Gemisch aus im Wesentlichen linearen Siloxanen und Organopolysiloxanharz handelt.

Im Gemisch (1) aus im Wesentlichen linearen Siloxanen und Organopolysiloxanharzen beträgt der Gewichtsanteil an Harz bevorzugt 0,1 bis 80 Gew.-%, besonders bevorzugt 10 bis 55 Gew.-%.

Die erfindungsgemäß eingesetzten Organosiliciumverbindungen (1) sind handelsübliche Produkte oder können nach in der Siliciumchemie gängigen Verfahren hergestellt werden.

Beispiele für Reste R² sind die oben für R angegebenen Beispiele.

Bevorzugt handelt es sich bei Rest R² um Kohlenwasserstoffreste mit 1 bis 18 Kohlenstoffatomen, besonders bevorzugt um Kohlenwasserstoffreste mit 1 bis 6 Kohlenstoffatomen, insbesondere um aliphatische Kohlenwasserstoffreste 1 bis 6 Kohlenstoffatomen, ganz besonders bevorzugt um den Methylrest.

Bei den erfindungsgemäß eingesetzten Organosiliciumverbindungen (2) kann es sich um alle seitenständig SiH-haltigen Organosiloxane handeln, die auch bisher in durch Hydrosilylierung vernetzbaren Massen eingesetzt worden sind.

Obwohl in Formel (II) nicht angegeben, kann aufgrund der nach dem Stand der Technik gängigen Syntheserouten sowie aufgrund der inhärenten Labilität von SiH-Gruppen, insbesondere bei höheren Temperaturen und/oder bei Gegenwart geeigneter Katalysatoren und Reaktionspartner, der Bestandteil (2) einen geringen Gehalt, typischerweise kleiner als 100 Gew.-ppm, Si-gebundener OH-Gruppen aufweisen.

Bei den erfindungsgemäß eingesetzten Organosiliciumverbindungen (2) handelt es sich bevorzugt um solche, die aus Einheiten der Formel (II) bestehen.

Bevorzugt handelt es sich bei den Organosiliciumverbindungen (2) um Organopolysiloxane mit einer Viskosität von 2 bis 1000 mPas, besonders bevorzugt 10 bis 500 mPas, jeweils bei 25°C.

Beispiele für Organohydrogenpolysiloxane (2) sind lineare, verzweigte und cyclische Organohydrogenpolysiloxane, die beispielsweise aus Einheiten der Formeln (CH₃)₃SiO_{1/2}-, H (CH₃)SiO_{2/2}-, (CH₃) ₂SiO-_{2/2} und (CH₃)SiO_{3/2}- zusammengesetzt sein können.

Beispiele für verzweigte Organopolysiloxane (2) sind CH₃SiO_{3/2}-, (CH₃)₂SiO_{2/2}- und H(CH₃)SiO_{2/2}-Einheiten enthaltende Siloxane mit (CH₃)₃SiO_{1/2}-Endgruppen.

Bevorzugte Beispiele für cyclische Organopolysiloxane (2) sind Copolymere enthaltend H(CH₃)SiO_{2/2}- und (CH₃)₂SiO_{2/2}-Einheiten oder Homopolymere enthaltend ausschließlich H(CH₃)SiO_{2/2}-Einheiten, wobei Homopolymere besonders bevorzugt sind, wie Pentamethylcyclopentasiloxan (SiMe(H)O)₅; D₅^{H} oder Hexamethylcyclohexasiloxan (SiMe(H)O)₆; D₆^{H}, oder Heptamethylcycloheptasiloxan (SiMe(H)O)₇; D₇^{H}, oder Octamethylcyclooctasiloxan (SiMe(H)O)₈; D₈^{H}.

Bevorzugte lineare Organopolysiloxane (2) sind H(CH₃)SiO_{2/2}-Einheiten enthaltende Siloxane mit (CH₃)₃SiO_{1/2}-Endgruppen,
H(CH₃)SiO_{2/2} - und (CH₃)₂SiO_{2/2}-Einheiten enthaltende Siloxane mit (CH₃)₃SiO_{1/2}-Endgruppen,
(Et)₂SiO_{2/2}- und H(CH₃)SiO_{2/2}-Einheiten enthaltende Siloxane mit (CH₃)₃SiO_{1/2}-Endgruppen,
(Et)₂SiO_{2/2}-, (CH₃)₂SiO_{2/2}- und H(CH₃)SiO_{2/2}-Einheiten enthaltende Siloxane mit (CH₃)₃SiO_{1/2}-Endgruppen,
(Et) (CH₃)SiO_{2/2}-, (CH₃)₂SiO_{2/2}- und H (CH₃) SiO_{2/2}-Einheiten enthaltende Siloxane mit (CH₃)₃SiO_{1/2}-Endgruppen und
(Et) (CH₃)SiO_{2/2}- und H(CH₃)SiO_{2/2}-Einheiten enthaltende Siloxane mit (CH₃)₃SiO_{1/2}-Endgruppen mit Et gleich Ethylrest,
wobei H(CH₃)SiO_{2/2}-Einheiten enthaltende Siloxane mit (CH₃)₃SiO_{1/2}-Endgruppen sowie H(CH₃)SiO_{2/2}- und (CH₃)₂SiO_{2/2}-Einheiten enthaltende Siloxane mit (CH₃)₃SiO_{1/2}-Endgruppen, insbesondere solche mit einem Molverhältnis von H(CH₃)SiO_{2/2}- zu (CH₃)₂SiO_{2/2}-Einheiten von 3 bis 3,5 : 1 oder 0,9 bis 1,1 : 1, besonders bevorzugt sind.

Bevorzugt handelt es sich bei den Organopolysiloxanen (2) um lineare Siloxane mit seitenständigen SiH-Gruppen oder um cyclische Siloxane, wobei lineare Siloxane der Struktur

R²₃SiO(SiHR²O)ₘ (R²₂SiO) ₙSiR²₃

besonders bevorzugt sind, wobei R² die obengenannte Bedeutung hat, m eine ganze Zahl von 3 bis 100 ist und n 0 oder eine ganze Zahl von 1 bis 150 ist.

Obwohl in der obigen Formel nicht angegeben, können die erfindungsgemäß eingesetzten linearen Siloxane (2) herstellungsbedingt einen molaren Anteil von Verzweigungen, d.h. T- und/oder Q-Einheiten, von bis zu 1% , bevorzugt bis zu 1000 ppm, aufweisen.

Das erfindungsgemäß eingesetzte Organopolysiloxan (2) enthält pro Molekül vorzugsweise durchschnittlich 5 bis 60 SiH-Gruppen.

Das erfindungsgemäß eingesetzte Organopolysiloxan (2) hat einen Gehalt an Si-gebundenem Wasserstoff von ≥ 0,7 Gew.-%, bevorzugt > 1 Gew.-%.

Der Anteil von Komponente (2) beträgt bevorzugt zwischen 1 und 10 Gewichtsteile, besonders bevorzugt zwischen 1 und 5 Gewichtsteile, jeweils bezogen auf 100 Gewichtsteile erfindungsgemäße Zusammensetzung.

Die erfindungsgemäß eingesetzten Organopolysiloxane (2) sind handelsübliche Produkte oder können nach in der Siliciumchemie gängigen Verfahren hergestellt werden.

Bevorzugt handelt es sich bei den erfindungsgemäß eingesetzten Organopolysiloxanen (3) um solche der Formel

R³₂HSiO(SiR³₂O)ₚSiR³₂H (III)

,
wobei
R³ gleich oder verschieden sein kann und gegebenenfalls substituierter, SiC-gebundener, aliphatisch gesättigter Kohlenwasserstoffrest bedeutet und
p 0 oder eine ganze Zahl von 1 bis 250 ist.

Beispiele für Reste R³ sind die oben für R angegebenen Beispiele.

Bevorzugt handelt es sich bei Rest R³ um aliphatisch gesättigte Kohlenwasserstoffreste mit 1 bis 18 Kohlenstoffatomen, besonders bevorzugt um aliphatisch gesättigte Kohlenwasserstoffreste mit 1 bis 6 Kohlenstoffatomen, insbesondere um den Methylrest.

Obwohl in Formel (III) nicht angegeben, können die erfindungsgemäß eingesetzten linearen Siloxane (3) herstellungsbedingt einen molaren Anteil von Verzweigungen, d.h. T- und/oder Q-Einheiten, von bis zu 1%, bevorzugt bis zu 1000 ppm, aufweisen.

Die erfindungsgemäß eingesetzten Siloxane (3) enthalten vorzugsweise Einheiten der Formeln H(CH₃)₂SiO_{1/2}- und (CH₃)₂SiO_{2/2}-, wobei das Disiloxan H(CH₃)₂SiOSi(CH₃)₂H sowie Organopolysiloxane bestehend aus Einheiten der Formeln H(CH₃)₂SiO_{1/2}- und (CH₃)₂SiO_{2/2}- besonders bevorzugt sind.

Beispiele für Organopolysiloxane (3) sind
H (CH₃) ₂SiOSi (CH₃) ₂H,
H(CH₃)₂SiO [(CH₃)₂SiO]₈Si (CH₃)₂H,
H(CH₃)₂SiO [(CH₃)₂SiO] ₁₂Si (CH₃)₂H,
H(CH₃)₂SiO[(CH₃)₂SiO] ₁₅Si (CH₃)₂H,
H (CH₃)₂SiO[(CH₃)₂SiO] ₅₀Si (CH₃)₂H,
H (CH₃)₂SiO [(CH₃)₂SiO] ₆₀Si (CH₃)₂H und
H(CH₃) ₂SiO[(CH₃)₂SiO]₂₂₀Si (CH₃)₂H.

Die erfindungsgemäß eingesetzten Siloxane (3) haben eine Viskosität von vorzugsweise 0,4 bis 5 000 mPas, besonders bevorzugt 2,5 bis 1 500 mPas, jeweils bei 25°C.

Die erfindungsgemäß eingesetzten Organopolysiloxane (3) sind handelsübliche Produkte oder können nach in der Siliciumchemie gängigen Verfahren hergestellt werden.

Der Anteil von Komponente (3) beträgt bevorzugt zwischen 3 und 60 Gewichtsteile, besonders bevorzugt zwischen 5 und 50 Gewichtsteile, insbesondere bevorzugt zwischen 10 und 50 Gewichtsteile, jeweils bezogen auf 100 Gewichtsteile erfindungsgemäße Zusammensetzung.

In den erfindungsgemäßen Zusammensetzungen liegt das Verhältnis der Gewichtsanteile der Komponente (3) zur Komponente (2) bevorzugt zwischen 60:1 und 0,3:1, besonders bevorzugt zwischen 50:1 und 0,5:1, insbesondere zwischen 25:1 und 1:1.

Das molare Verhältnis von Si-gebundenem Wasserstoff stammend aus Komponente (3) und bezogen auf 100 Gewichtsteile erfindungsgemäße Zusammensetzung, zur Summe des Si-gebundenen Wasserstoffes stammend aus den Komponenten (2) und (3), jeweils bezogen auf 100 Gewichtsteile erfindungsgemäße Zusammensetzung, liegt bevorzugt zwischen 0,05 und 1, besonders bevorzugt zwischen 0,1 und 1, insbesondere zwischen 0,2 und 1.

In der erfindungsgemäßen Zusammensetzungen kann das Molverhältnis der gesamten SiH-Gruppen in den Komponenten (2) und (3) zu Si-gebundenen Resten mit aliphatischer Kohlenstoff-Kohlenstoff-Mehrfachbindung der Komponente (1) in Bereichen von 0,8 bis 15 variieren, wobei ein Molverhältnis von 1,0 bis 5 bevorzugt und von 1,25 bis 3,5 besonders bevorzugt ist.

Als Bestandteil (4), der die Additionsreaktion (Hydrosilylierung) zwischen den Resten mit aliphatischer Kohlenstoff-Kohlenstoff-Mehrfachbindung und Si-gebundenem Wasserstoff fördert, können in den erfindungsgemäßen Massen alle bisher bekannten Hydrosilylierungskatalysatoren verwendet werden.

Als Hydrosilylierungskatalysator (4) werden bevorzugt Metalle aus der Gruppe der Platinmetalle, wie Platin, Rhodium, Palladium, Ruthenium und Iridium, vorzugsweise Platin und Rhodium, die auf feinteiligen Trägermaterialien, wie Aktivkohle, Metalloxiden, wie Aluminiumoxid oder Siliciumdioxid, fixiert sein können, oder eine Verbindung oder ein Komplex aus der Gruppe der Platinmetalle eingesetzt werden.

Besonders bevorzugt werden als Katalysator (4) Platin und Platinverbindungen verwendet, insbesondere solche Platinverbindungen, die in Polyorganosiloxanen löslich sind. Als lösliche Platinverbindungen (4) können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z.B. (Ph₃P)₂PtCl₂. Ganz besonders bevorzugt sind Komplexe des Platins mit Vinylsiloxanen, wie sym-Divinyltetramethyldisiloxan.

In einer besonderen Ausführungsform kann der Platin-Katalysator in UV-sensitiver Form vorliegt, was eine UV-aktivierte Härtung der erfindungsgemäßen Formulierungen ermöglicht. Beispiele für solche Katalysatoren sind in DE 102008000156 A1, Seite 2, Absatz [0006] bis Seite 3, Absatz [0012] (einschließlich), Seite 3, Absatz [0016] bis Seite 6, Absatz [0025] (einschließlich), sowie Seite 6, Absatz [0030] bis Seite 7, Absatz [0031] (einschließlich) genannt, die zum Offenbarungsgehalt der vorliegenden Erfindung zu zählen sind.

Die Menge des eingesetzten Hydrosilylierungskatalysators (4) richtet sich nach der gewünschten Vernetzungsgeschwindigkeit sowie ökonomischen Gesichtpunkten. Üblicherweise werden pro 100 Gew.-Teile erfindungsgemäße Zusammensetzung bevorzugt 1·10⁻⁵ bis 5·10⁻² Gewichtsteile, besonders bevorzugt 1·10⁻⁴ bis 1·10⁻² Gewichtsteile, insbesondere 5·10⁻⁴ bis 5·10⁻³ Gewichtsteile Platin-Katalysatoren, jeweils berechnet als Platin-Metall, eingesetzt.

Außer den Komponenten (1) bis (4) können die erfindungsgemäßen Zusammensetzungen noch alle weiteren Stoffe enthalten, die auch bisher zur Herstellung von additionsvernetzbaren Massen eingesetzt wurden, mit der Maßgabe, dass die weiteren Stoffe unterschiedlich sind zu den Komponenten (1) bis (4).

So können die erfindungsgemäßen Zusammensetzungen weitere Bestandteile enthalten, wie beispielsweise Inhibitoren (5), Füllstoffe (6), Additive (7) sowie Zuschlagsstoffe (8).

Die gegebenenfalls eingesetzten Inhibitoren (5) dienen der gezielten Einstellung der Verarbeitungszeit, Anspringtemperatur und Vernetzungsgeschwindigkeit der erfindungsgemäßen Massen.

Beispiele für Inhibitoren (5) sind acetylenische Alkohole, wie 1-Ethinyl-1-cyclohexanol, 2-Methyl-3-butin-2-ol und 3,5-Dimethyl-1-hexin-3-ol, 3-Methyl-2-dodecin-3-ol, Trialkylcyanurate, Alkylmaleate, wie beispielsweise Diallylmaleate, Dimethylmaleat und Diethylmaleat, Alkylfumarate, wie beispielsweise Diallylfumarat und Diethylfumarat, organische Hydroperoxide, wie beispielsweise Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitoren (5) hängt von ihrer chemischen Struktur ab, so dass sie individuell bestimmt werden muss.

Falls Inhibitoren (5) in den erfindungsgemäßen Siliconzusammensetzungen eingesetzt werden, handelt es sich um Mengen von vorzugsweise 1 bis 50 000 ppm, besonders bevorzugt 20 bis 2 000 ppm, insbesondere 100 bis 1 000 ppm, jeweils bezogen auf 100 Gewichtsteile erfindungsgemäßen Siliconzusammensetzung. Die erfindungsgemäßen Zusammensetzungen enthalten bevorzugt Inhibitor (5).

Bei den erfindungsgemäßen Zusammensetzungen kann auf den Zusatz von Inhibitor (5) verzichtet oder die Einsatzmenge reduziert werden, wenn andere Bestandteile der Zusammensetzung bereits eine gewisse Inhibitorwirkung zeigen.

Beispiele für gegebenenfalls eingesetzte Füllstoffe (6) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Weitere Beispiele für gegebenenfalls eingesetzte Füllstoffe (6) sind Organopoysiloxanharze, wobei es sich dabei um beliebige Siliconharze handeln kann, wie z.B. solche enthaltend Einheiten der Formel (I) mit b=0 und a gleich 0, 1 oder 3 sowie gegebenenfalls herstellungsbedingt Einheiten mit Hydroxy- und/oder Organyloxyresten, wie etwa bevorzugt bei 25°C und dem Druck der umgebenden Atmosphäre feste Organosiliconharze des Typus Silsesquioxan und MQ-Harz mit Schüttdichten bei bevorzugt 100 bis 1000 kg/m³ und Erweichungspunkten bevorzugt bei > 30°C, besonders bevorzugt bei > 40°C.

Falls Füllstoffe (6) eingesetzt werden, handelt es sich bevorzugt um gefällte und pyrogene Kieselsäuren, Quarze und Kreiden.

Die spezifische BET-Oberfläche der gegebenenfalls eingesetzten Kieselsäuren (6) beträgt bevorzugt mindestens 50 m²/g, besonders bevorzugt 100 bis 400 m²/g.

Falls Füllstoffe (6) eingesetzt werden, handelt es sich um Mengen von vorzugsweise 0,1 bis 75 Gewichtsteilen, besonders bevorzugt 1 bis 50 Gewichtsteilen, jeweils bezogen auf 100 Gewichtsteile der erfindungsgemäßen Zusammensetzung. In den erfindungsgemäßen Zusammensetzungen werden bevorzugt dann Füllstoffe (6) eingesetzt, wenn als Komponente (1) kein aliphatisch ungesättigtes Siliconharz eingesetzt wird. Falls als Komponente (1) jedoch bereits ein aliphatisch ungesättigtes Siliconharz eingesetzt wird, kann der Zusatz von Füllstoff (6) entsprechend reduziert oder auf diesen ganz verzichtet werden, was insbesondere für die Herstellung von hochtransparenten Vergussmassen bevorzugt ist.

Bevorzugte Beispiele für die erfindungsgemäß gegebenenfalls eingesetzten nicht haftungsrelevanten Additive (7) sind Dispergierhilfsmittel, Pigmente, Farbstoffe, Fungizide, Duftstoffe, Oxidationsinhibitoren, flammabweisende Mittel und schwerbrennbar machende Mittel, Rheologieregler, UV-Stabilisatoren und Hitzestabilisatoren.

Falls Additive (7) eingesetzt werden, handelt es sich um Mengen von vorzugsweise 0,0001 bis 5 Gewichtsteilen, besonders bevorzugt 0,01 bis 2,5 Gewichtsteilen, jeweils bezogen auf 100 Gewichtsteile der erfindungsgemäßen Zusammensetzung. Zur Herstellung der erfindungsgemäßen Zusammensetzungen werden bevorzugt keine Additive (7) eingesetzt.

Bevorzugte Beispiele für gegebenenfalls eingesetzte Zuschlagsstoffe (8) sind organische Lösungsmittel sowie Weichmacher, wie z.B. organische Polymere und Siliconöle.

Falls Zuschlagstoffe (8) eingesetzt werden, handelt es sich um Mengen von vorzugsweise 0,1 bis 70 Gewichtsteilen, besonders bevorzugt 1 bis 40 Gewichtsteilen, jeweils bezogen auf 100 Gewichtsteile der erfindungsgemäßen Zusammensetzung. Zur Herstellung der erfindungsgemäßen Zusammensetzungen werden bevorzugt keine Zuschlagstoffe (8) eingesetzt.

Über die Komponenten (1) bis (8) hinausgehend enthalten die erfindungsgemäßen Zusammensetzungen vorzugsweise keine weiteren Stoffe.

Bei den einzelnen in den erfindungsgemäßen vernetzbaren Massen eingesetzten Komponenten kann es sich jeweils um eine Art dieser Komponenten wie auch um ein Gemisch aus mindestens zwei Arten dieser Komponenten handeln.

Die Dichte der erfindungsgemäßen Massen liegt vorzugsweise zwischen 0,8 und 3 g/cm³, besonders bevorzugt zwischen 0,9 und 1,5 g/cm³, jeweils bei 23°C und dem Druck der umgebenden Atmosphäre, also einem Druck von 900 bis 1100 hPa.

Die Herstellung der erfindungsgemäßen Organopolysiloxanmassen kann nach bekannten Verfahren erfolgen, wie beispielsweise durch Mischen der einzelnen Komponenten in beliebiger Reihenfolge und mit beliebigen Mischaggregaten.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Handelt es sich bei der erfindungsgemäßen Zusammensetzung um eine 1-Komponenten-Siliconkautschukmasse, wird beim erfindungsgemäßen Verfahren vorzugsweise Organosiliciumverbindung (1) mit Organo(hydrogen)polysiloxan (3) vermischt und anschließend mit gegebenenfalls weiteren Bestandteilen (6), (7) und (8), dem Organo(hydrogen)polysiloxan (2) sowie gegebenenfalls mit Inhibitor (5) und dem Hydrosilylierungskatalysator (4) vermischt, wobei das Vermischen vorzugsweise über diskontinuierliche und/oder kontinuierliche Mischaggregate, wie beispielsweise Kneter, Dissolver oder Planetenmischer, erfolgt.

Handelt es sich bei den erfindungsgemäßen Zusammensetzungen um eine additionsvernetzende 2-Komponenten-Siliconkautschukmasse, so können die beiden Komponenten der erfindungsgemäßen Zusammensetzungen alle Bestandteile in beliebigen Kombinationen und Mengenverhältnissen enthalten, mit der Maßgabe, dass eine Komponente nicht gleichzeitig die Bestandteile (2), (3) und (4) enthält, insbesondere nicht die Bestandteile (1), (2), (3) und (4). Vorzugsweise enthält eine der beiden Komponenten die Bestandteile (1) und (4), während die andere Komponente die Bestandteile (2) und (3) sowie ggf. weiteres (1) beinhaltet.

Handelt es sich bei der erfindungsgemäßen Zusammensetzung um eine 2-Komponenten-Siliconkautschukmasse, wird beim erfindungsgemäßen Verfahren zur Herstellung der ersten Mischungskomponente (z.B. bezeichnet als Komponente X) bevorzugt Organosiliciumverbindung (1) mit ggf. Füllstoff (6), ggf. Inhibitor (5), ggf. weiteren Bestandteilen (7) und (8) sowie dem Hydrosilylierungskatalysator (4) vermischt, wobei das Vermischen vorzugsweise über diskontinuierliche und/oder kontinuierliche Mischaggregate, wie beispielsweise Kneter, Dissolver oder Planetenmischer, erfolgt. Zur Herstellung der erfindungsgemäßen zweiten Mischungskomponente (z.B. bezeichnet als Komponente Y) wird vorzugsweise ggf. weitere Organosiliciumverbindung (1) mit den Organo(hydrogen)polysiloxanen (2) und (3) sowie ggf. weiteren Bestandteilen (5), (6), (7) und (8) vermischt, wobei auch hier das Vermischen vorzugsweise über diskontinuierliche und/oder kontinuierliche Mischaggregate, wie beispielsweise Kneter, Dissolver oder Planetenmischer, erfolgt.

Eine weitere bevorzugten Arbeitsweise des erfindungsgemäßen Verfahrens ist dadurch gekennzeichnet, dass man - falls Bestandteil (1) und Bestandteil (2) in der gleichen Komponente enthalten sind - stets zuerst den Bestandteil (1) mit allen anderen Bestandteilen (sofern vorhanden) außer den Komponenten (2), (4) und gegebenenfalls (5) "herunterverdünnt" und erst danach die Komponenten (2), (4) und gegebenenfalls (5) zugibt. Diese Verfahrensweise ist besonders dann von Vorteil, wenn es sich bei Komponente (1) zumindest zum Teil um Organopolysiloxanharze handelt.

In einer bevorzugten Verfahrenvariante sind die Bestandteile (1) bis (8) auf zwei Komponenten (X) und (Y) aufgeteilt. Das Mischungsverhältnis der Komponente (X) zu Komponente (Y) kann von 100:1 bis 1:100 betragen. Bevorzugt sind Mischungsverhältnisse von 20:1 bis 1:20, insbesondere Mischungsverhältnisse von 15:1 bis 1:15.

Das erfindungsgemäße Verfahren kann kontinuierlich oder diskontinuierlich durchgeführt werden.

Das erfindungsgemäße Verfahren wird bei einer Temperatur im Bereich von bevorzugt -20 bis +100°C, besonders bevorzugt im Bereich von 0 bis +80°C, insbesondere +10 bis +60°C durchgeführt. Ferner wird das erfindungsgemäße Verfahren beim Druck der umgebenden Atmosphäre, also einem Druck von 900 bis 1100 hPa, durchgeführt.

Das erfindungsgemäße Verfahren kann unter Ausschluss von Feuchtigkeit oder unter Schutzgasatmosphäre durchgeführt werden, was jedoch nicht bevorzugt ist.

Falls es sich bei Komponente (4) in den erfindungsgemäßen Massen um einen UV-sensitiven Katalysator handelt, wird das erfindungsgemäße Verfahren bevorzugt unter Ausschluss von Licht, insbesondere unter Ausschluss von UV-Licht, d.h. Licht einer Wellenlänge von 1 bis 550 nm, durchgeführt.

Die erfindungsgemäßen durch Anlagern von Si-gebundenem Wasserstoff an aliphatische Mehrfachbindung vernetzbaren Zusammensetzungen können unter den gleichen Bedingungen vernetzen gelassen werden, wie die bisher bekannten durch Hydrosilylierungsreaktion vernetzbaren Massen.

Die erfindungsgemäße Vernetzung der selbsthaftenden, zu Elastomeren vernetzbare Siliconzusammensetzungen mit gleichzeitigem Haftungsaufbau erfolgt vorzugsweise bei Temperaturen von -30 bis +80°C, bevorzugt bei 0 bis +60°C, besonders bevorzugt bei +10 bis +30°C, insbesondere bei Raumtemperatur, also 23°C. Die Aushärtung kann jedoch auch bei anderen Temperaturen erfolgen, beispielsweise durch Erwärmen auf bis zu 250°C, was jedoch nicht bevorzugt ist.

Handelt es sich bei den erfindungsgemäßen Zusammensetzungen um eine additionsvernetzende 2-Komponenten-Siliconkautschukmasse, so beträgt die Topfzeit (offene Verarbeitungszeit) maximal 24 Stunden, vorzugsweise maximal 6 Stunden, besonders bevorzugt maximal 120 Minuten, bezogen auf Raumtemperatur (23°C) und 50 % rel. Luftfeuchte.

In einer besonderen Ausführungsform erfolgt die erfindungsgemäße Vernetzung der selbsthaftenden, zu Elastomeren vernetzbare Siliconzusammensetzungen mit gleichzeitigem Haftungsaufbau durch UV-Aktivierung, wie in DE 102008000156 A1 beschrieben. Dabei wird die bestimmungsgemäß applizierte, erfindungsgemäße Zusammensetzung vorzugsweise für mindestens 0,1 s, bevorzugt mindestens 2 s, bis maximal 2 Minuten, bevorzugt maximal 1 Minute, mit UV-Licht des Wellenlängenbereiches 230 bis 400 nm, wie es beispielsweise mit einem sog. Eisenstrahler erzeugt werden kann, und mit einer Strahlungsintensität von vorzugsweise mindestens 25 mW/cm², bevorzugt 70 bis 150 mW/cm², belichtet. Die Vernetzungsdauer ist abhängig von der Intensität der UV-Strahlung und der Dauer der UV-Bestrahlung. Die verwendeten UV-Strahlungsquellen sind handelsübliche Produkte und können über dem Fachmann bekannte Quellen bezogen werden.

Ein weiterer Gegenstand der Erfindung sind Formkörper, hergestellt durch Vernetzung der erfindungsgemäßen Zusammensetzungen.

Die erfindungsgemäßen Formkörper sind milchig trüb bis transparent, bevorzugt jedoch transparent.

Bei den erfindungsgemäßen Formkörpern kann es sich um beliebige Elastomere handeln, wie etwa Dichtungen, Pressartikel, extrudierte Profile, Beschichtungen, Imprägnierungen, Verguss, Linsen, Fresnel-Linsen, Prismen, polygone Strukturen, Laminat- oder Klebschichten.

Falls es sich bei den erfindungsgemäßen Formkörpern um transparente Formkörper handelt, haben diese bevorzugt eine Transmission > 80 % bei Wellenlängen > 300 nm, besonders bevorzugt > 85 % bei 300 nm, > 90 % bei 400 nm und > 92 % bei 500-800 nm, jeweils bezogen auf 2 mm Schichtstärke und gemessen gemäß DIN 5036, Teil 3, Kapitel 6.3.1, in Transmission im Vergleich gegen Luft.

Bei den erfindungsgemäßen Formkörpern handelt es sich um Elastomere mit einer Shore-A-Härte von bevorzugt > 5, besonders bevorzugt > 10, insbesondere 20 bis 60, jeweils gemessen nach DIN 53505-A (23°C, Probekörper mit 6 mm Dicke).

Die Dichte der erfindungsgemäßen Formkörper liegt vorzugsweise zwischen 0,8 und 3 g/cm³, besonders bevorzugt zwischen 1 und 1,5 g/cm³, jeweils bei 23°C und dem Druck der umgebenden Atmosphäre, also einem Druck von 900 bis 1100 hPa.

Die erfindungsgemäßen Formkörper haben Konuspenetrationswerte von bevorzugt < 100 1/10 mm, besonders bevorzugt < 60 1/10 mm, insbesondere < 25 1/10 mm, ganz besonders bevorzugt 0 bis 20 1/10 mm, jeweils gemessen mittels Penetrometer nach DIN ISO 2137 unter Verwendung eines 150 g Standardkonus (inkl. beweglicher Zubehörteile wie z.B. Fallstab), wie er in DIN ISO 2137 (Ausgabe 1997-08) im Abschnitt 4.2.1 und Bild 3 beschrieben ist, an Prüfkörpern, welche durch Vulkanisation für 1 Stunde bei 100°C im Umluftofen hergestellt wurden.

Die erfindungsgemäßen Formkörper haben einen extrahierbaren Bestandteil, bestehend aus den Organosiliciumverbindungen (1), (2) und (3), von bevorzugt < 5 Gew.-%, besonders bevorzugt < 2,5 Gew.-%, insbesondere < 1 Gew.-%. Zur Bestimmung der extrahierbaren Bestandteile werden 2 g der erfindungsgemäßen Masse für 1h bei 150°C ausvulkanisiert, danach mit 35 ml Heptan 24 Stunden mit einem Überkopfschüttler geschüttelt, das Heptan verworfen und der Siliconrückstand bei 150°C bis zur Gewichtskonstanz getrocknet; die Gewichtsdifferenz zum Anfangsgewicht vor Zugabe des Heptans ist der Anteil an extrahierbaren Bestandteilen.

Die erfindungsgemäßen Formkörper erfordern eine Eindringkraft, d.h. die Kraft, welche die Messmaschine aufwenden muss, um die Messsonde bis zu einem vorgegebenen Punkt in den erfindungsgemäßen Probekörper eindrücken zu können, von bevorzugt > 0,5 N, besonders bevorzugt > 1 N, insbesondere > 3 N, ganz besonders bevorzugt > 4 N, jeweils bezogen auf einen zylindrischen Prüfkörper von mindestens 10 mm Dicke, 25 mm Durchmesser und gemessen nach der nachfolgend beschriebenen Methode.

Die erfindungsgemäßen Formkörper haben vorzugsweise eine geringe Oberflächenklebrigkeit. Das zum Ablösen der Messsonde vom Probenkörper erforderliche Moment beträgt bevorzugt -1,2 bis 0 N·mm, besonders bevorzugt -1 bis 0 N·mm, insbesondere -0,5 bis 0 N·mm, jeweils bezogen auf einen zylindrischen Prüfkörper von mindestens 10 mm Dicke, 25 mm Durchmesser und gemessen nach der nachfolgend beschriebenen Methode.

Die bei der Bestimmung der Oberflächenklebrigkeit der erfindungsgemäßen Formkörper messbare Wegdifferenz bis zum Ablösen der Messsonde von der Probekörperoberfläche beträgt bevorzugt < 3 mm, besonders bevorzugt < 1 mm, insbesondere 0 bis 0,5 mm, jeweils bezogen auf einen zylindrischen Prüfkörper von mindestens 10 mm Dicke, 25 mm Durchmesser und gemessen nach der nachfolgend beschriebenen Methode.

Die Eindringkraft, Wegdifferenz und Oberflächenklebrigkeit werden wie folgt bestimmt, z.B. mit Hilfe eines sog. Texture Analyzers (Modell: TA HDi Texture Analyser, Stable Micro Systems Ltd, Godalming, UK): Eine genormte Messsonde (zylindrischer Penetrationsstempel aus Edelstahl mit 4 mm Durchmesser, käuflich erhältlich unter der Typenbezeichnung P/4 von Stable Micro Systems Ltd, Godalming, UK) wird bis zu einer vorgegebenen Wegstrecke (1 mm) mit einer Geschwindigkeit von 1 mm/s senkrecht in den Prüfkörper, welcher sich in einem zylindrischen Aluminiumtiegel von 18 mm Höhe und 25 mm Innendurchmesser befindet (der Prüfkörper ist ein Vulkanisat mit einer Mindesthöhe von 10 mm bis 18 mm und wird durch Vulkanisation über 14 Tage bei Raumtemperatur, 50 % rel. Luftfeuchte und Normaldruck direkt im Aluminiumtiegel hergestellt), zentrisch eingedrückt und in dieser Position für 60 s gehalten. Nach dieser Relaxationszeit wird die Messsonde mit einer Geschwindigkeit von 2 mm/s senkrecht und bis zum vollständigen Ablösen von der Prüfkörperoberfläche abgezogen. Die bei diesen Vorgängen auf die Messsonde wirkenden Kräfte werden aufgezeichnet und als Kraft/ZeitDiagramm ausgewertet. Die beim Eindrücken der Messsonde in den Prüfkörper durchlaufene Kraftspitze vor Beginn der Relaxationszeit entspricht der Eindringkraft; diese wird mit positiver Einheit angegeben. Die zum Ablösen der Messsonde von der Prüfkörperoberfläche durchlaufene negative Kraftspitze ist die sog. Klebkraft, wobei die Oberflächenklebrigkeit definiert ist als die Fläche im Kraft/Zeit-Diagramm, welche der Kraft/Zeit-Graph während des Ablösevorgangs im negativen Kraftbereich und bis zum vollständigen Ablösen der Messsonde von der Prüfkörperoberfläche umschließt. Weiterhin bedeutet die im negativen Kraftbereich von der Messsonde bis zum vollständigen Ablösen von der Prüfkörperoberfläche zurückgelegte Wegstrecke die oben genannte Wegdifferenz.

Die erfindungsgemäßen Formkörper zeigen einen Verlustfaktor bei 1 Hz und 23°C von bevorzugt < 0,5, besonders bevorzugt < 0,3, insbesondere < 0,2, jeweils gemessen mittels Dynamisch mechanischer Analyse (DMA) gemäß ISO 6721-1 und -4.

Die erfindungsgemäßen Formkörper haben eine Härte Sh 00 von bevorzugt > 20, besonders bevorzugt > 45, insbesondere 70 bis 95, jeweils gemessen nach ASTM D 2240 (23°C, Probekörper mit 6 mm Dicke).

Bei den erfindungsgemäßen Formkörpern kann es sich auch um einen Materialverbund handeln, bei dem mindestens ein Teil des Verbundes aus einem Siliconelastomer besteht, das aus den erfindungsgemäßen Siliconzusammensetzungen hergestellt wird, das mit wenigstens einem Substratmaterial fest verbunden ist.

Ein weiterer Gegenstand der Erfindung ist ein Verfahren zur Herstellung von Materialverbunden, bei denen die erfindungsgemäße Siliconzusammensetzung auf mindestens ein Substrat aufgebracht und anschließend vernetzen gelassen wird.

Beispiele hierfür sind Beschichtungen, Verguss, die Herstellung von Formartikeln, Verbundmaterialien und Verbundformteile. Unter Verbundformteilen soll hier ein einheitlicher Formartikel aus einem Verbundmaterial verstanden werden, der aus einem aus den erfindungsgemäßen Siliconzusammensetzungen hergestellten Siliconelastomerteil und mindestens einem Substrat so zusammengesetzt ist, dass zwischen den beiden Teilen eine feste, dauerhafte Verbindung besteht.

Beim erfindungsgemäßen Verfahren zur Herstellung von Materialverbunden kann die erfindungsgemäße Siliconzusammensetzung auch zwischen mindestens zwei gleichen oder verschiedenen Substraten vulkanisiert werden, wie z.B. bei Verklebungen, Laminaten oder Einkapselungen.

Die erfindungsgemäßen selbsthaftenden Siliconzusammensetzungen können insbesondere überall dort vorteilhaft eingesetzt werden, wo eine gute Haftfestigkeit zwischen dem additionsvernetzten Siliconelastomer und wenigstens einem Substrat, vorzugsweise bestehend aus organischen Kunststoffen, Metallen, Metall-Legierungen, organischen und anorganischen Gläsern, Keramiken, Glaskeramiken und Emaille, erwünscht ist. Bevorzugt handelt es sich bei den Substraten um Metalle, Metall-Legierungen, anorganische Gläser, Keramiken, Glaskeramiken und Emaille. Besonders bevorzugt sind Aluminium-Werkstoffe, Stahlwerkstoffe, anorganische Gläser, Glaskeramiken und Emaille. Das Substrat kann als Formteil, Folie oder Beschichtung vorliegen.

Die erfindungsgemäßen selbsthaftenden, additionsvernetzenden Siliconzusammensetzungen eignen sich zur Herstellung von Materialverbunden durch Beschichten, Verkleben und Vergießen sowie zur Herstellung von substratgeträgerten Formartikeln durch Gieß-, Verguss-, Spritzguss-, Extrusions- und Moulding-Verfahren.

Die erfindungsgemäßen selbsthaftenden, additionsvernetzenden Siliconzusammensetzungen eigenen sich für eine Vielzahl künstlerischer sowie industrieller Anwendungen, beispielsweise im Bereich der Elektro-, Elektronik-, Haushaltgeräte-, Gebrauchsgüter-, Bau-, Glas-, Automobil-, Photovoltaik- oder Optikindustrie, in der Medizintechnik, in der Herstellung von Sport- und Freizeitartikeln, im Bereich des Transportwesens etc. Beispiele hierfür sind die Beschichtung von Textilgeweben und textilen Flächengebilden; die Beschichtung von metallischen Werkstoffen, Gläsern, Glaskeramiken, Keramiken, Emaille und photovoltaischen Zellen; die Beschichtung oder der Verguss elektrischer und elektronischer Komponenten; die Einkapselung von Solarzellen; das Fügen und die Verklebung optischer Bauteile; die Herstellung glasgeträgerter optischer Bauteile; das Laminieren von Solarmodulen; und Verklebungen und Laminationen im glaskünstlerischen Bereich.

Die erfindungsgemäßen Zusammensetzungen führen während der Vulkanisation bei Raumtemperatur (23°C) innerhalb von bevorzugt 7 Tagen, besonders bevorzugt 3 Tagen, insbesondere innerhalb von 24 Stunden zur Selbsthaftung.

Die erfindungsgemäßen Zusammensetzungen haben den Vorteil, dass sie einfach in der Herstellung und frei von herkömmlichen Haftvermittlern sind.

Die erfindungsgemäßen Zusammensetzungen haben den Vorteil, dass sie eine gute Lagerstabilität und - wo erforderlich - Fließfähigkeit haben.

Die erfindungsgemäßen Zusammensetzungen haben den Vorteil, dass sie eine hohe Vernetzungsgeschwindigkeit bereits bei niedrigen Temperaturen haben.

Des Weiteren haben die erfindungsgemäßen Zusammensetzungen den Vorteil, dass sie ein hohes Niveau der Gebrauchseigenschaften, wie Transparenz, Nichtkorrosivität und einfache Anwendung, zeigen.

Die erfindungsgemäßen Zusammensetzungen haben den Vorteil, dass sich aus ihnen bei Raumtemperatur in befriedigender Weise belastbare, ggf. auch hochtransparente, Materialverbunde für technische Anwendungen herstellen lassen.

Ferner haben die erfindungsgemäßen Zusammensetzungen den Vorteil, dass daraus hergestellte Formkörper eine hohe Haftfestigkeit auf ausgewählten Substraten haben, wobei sich die Haftung bereits bei Raumtemperatur aufbaut, sowie sehr gute Hydrolysebeständigkeit bei erhöhter Temperatur.

Überraschenderweise führt erst die Kombination des SiH-haltigen Siloxans (2) mit dem SiH-endständigen Organopolysiloxan (3) auch in Abwesenheit der literaturbekannten Haftvermittler zu der gewünschten exzellenten Selbsthaftung auf diversen Substratmaterialien. Dadurch ist es möglich, zu hochtransparenten, weil haftvermittlerfreien Materialverbunden zu gelangen, die zudem bereits bei Raumtemperatur hergestellt werden können.

Die erfindungsgemäßen selbsthaftenden, additionsvernetzenden Siliconzusammensetzungen haben ferner die folgenden Vorteile:
- die rheologischen Eigenschaften respektive die Fließfähigkeit der unvernetzten Siliconzusammensetzungen sind frei wählbar, da etwaige, die Rheologie negativ beeinflussende Haftvermittleradditive nicht anwesend sind;
- die Vernetzungsgeschwindigkeit (und damit Vulkanisationscharakteristik) kann je nach Inhibitorgehalt beliebig eingestellt werden;
- die vernetzten Elastomere haben eine hohe Haftfestigkeit auf metallischen Werkstoffen, anorganischen Gläsern, Glaskeramiken, Keramiken und Emaille,
- die vernetzten Elastomere haben eine exzellente Transparenz bei entsprechend formulierten Siliconzusammensetzungen,
- keine Freisetzung von toxischen Spaltprodukten oder flüchtigen Bestandteilen bei der Vernetzung, die den Schrumpf negativ beeinflussen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 23°C, bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die Reißfestigkeit wird nach DIN 53504-S1 bestimmt.

Die Reißdehnung wird nach DIN 53504-S1 bestimmt.

Die Shore-A-Härte wird nach DIN (Deutsche Industrie Norm) 53505-A (Ausgabe August 2000) bestimmt.

### Vergleichsbeispiel 1 (V1)

Als Vergleich dient ein Zweikomponentensilicon, welches von der Wacker Chemie AG, München, unter der Bezeichnung ELASTOSIL^{®} RT 601 A/B käuflich erhältlich ist. Das Mischungsverhältnis von A-zu B-Komponente beträgt 9:1 (nach Gewicht). Die Mischung wird für 2 Minuten bei einem Druck von 0.5 kPa (5 mbar) entgast und anschließend in eine Edelstahlform, welche eine Vertiefung (Oberfläche: Hochglanz, poliert) in der Abmaßung 200 mm x 300 mm x 2 mm enthält gegeben, wobei die Innenoberflächen zuvor mit einem wasserbasierenden Formtrennmittel (käuflich erhältlich unter der Bezeichnung ELASTOSIL^{®} AUX FORMTRENNMITTEL 32 von der Wacker Chemie AG, München) behandelt wurden. Man lässt für 24 Stunden bei Raumtemperatur vulkanisieren, entformt die Siliconelastomerfolie und lässt diese für weitere 7 Tage unter Normklima (23°C, 50 % rel. Luftfeuchte) konditionieren. Man erhält ein hochtransparentes, elastomeres Vulkanisat mittlerer Härte. Typische Einsatzgebiete dieser Vergussmasse sind beispielsweise der Bereich Glasverbund und der optische Apparatebau.

Die Ergebnisse zu den Materialeigenschaften finden sich in den Tabellen 1 und 2.

### Vergleichsbeispiel 2 (V2)

Als Vergleich dient ein Zweikomponentensilicon, welches von der Wacker Chemie AG, München, unter der Bezeichnung ELASTOSIL^{®} RT 604 A/B käuflich erhältlich ist. Das Mischungsverhältnis von A-zu B-Komponente beträgt 9:1 (nach Gewicht). Die Mischung wird für 2 Minuten bei einem Druck von 0.5 KPa (5 mbar) entgast und anschließend in eine Edelstahlform, welche eine Vertiefung (Oberfläche: Hochglanz, poliert) in der Abmaßung 200 mm x 300 mm x 2 mm enthält, gegeben, wobei die Innenoberflächen zuvor mit einem wasserbasierenden Formtrennmittel (käuflich erhältlich unter der Bezeichnung ELASTOSIL^{®} AUX FORMTRENNMITTEL 32 von der Wacker Chemie AG, München) behandelt wurden. Man lässt für 24 Stunden bei Raumtemperatur vulkanisieren, entformt die Siliconelastomerfolie und lässt diese für weitere 7 Tage unter Normklima (23°C, 50 % rel. Luftfeuchte) konditionieren. Man erhält ein hochtransparentes, elastomeres Vulkanisat niedriger Härte. Typische Einsatzgebiete dieser Vergussmasse sind beispielsweise der Bereich Glasverbund, der opt. Apparatebau sowie das Laminieren und der Verguss von photovoltaischen Modulen.

Die Ergebnisse zu den Materialeigenschaften finden sich in den Tabellen 1 und 2.

### Beispiel 1

### Herstellung der A-Komponente

99,7 g einer siliconharzbasierten Grundmasse, bestehend aus 49,85 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 49,85 g eines vinyldimethylsiloxy-terminierten Polydimethylsiloxans mit einer Viskosität von 20 000 mPas (25°C) werden mit 0,3 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

### Herstellung der B-Komponente

32,3 g eines vinyldimethylsiloxy-terminierten Polydimethylsiloxans mit einer Viskosität von 1 000 mPas (25°C) werden mit 61,25 g eines hydrogendimethylsiloxy-terminierten Polydimethylsiloxans mit einer Viskosität von 1000 mPas (25°C), 6,1 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, sowie 0,15 g einer Inhibitorlösung, bestehend aus Ethinylcyclohexanol gelöst in vinyldimethylsiloxy-terminiertem Polydimethylsiloxan mit einer Viskosität von 1 000 mPas (25°C), und 0,2 g Divinyltetramethyldisiloxan vermischt.

Die Komponenten A und B werden miteinander vermischt, wobei das Mischungsverhältnis von A- zu B-Komponente 1:1 (nach Gewicht) beträgt. Die Mischung wird für 2 Minuten bei einem Druck von 0.5 KPa (5 mbar) entgast und anschließend in eine Edelstahlform, welche eine Vertiefung (Oberfläche: Hochglanz, poliert) in der Abmaßung 200 mm x 300 mm x 2 mm enthält, gegeben, wobei die Innenoberflächen zuvor mit einem wasserbasierenden Formtrennmittel (käuflich erhältlich unter der Bezeichnung ELASTOSIL^{®} AUX FORMTRENNMITTEL 32 von der Wacker Chemie AG, München) behandelt wurden. Man lässt für 24 Stunden bei Raumtemperatur vulkanisieren, entformt die Siliconelastomerfolie und lässt diese für weitere 7 Tage unter Normklima (23°C, 50 % rel. Luftfeuchte) konditionieren.

Die Ergebnisse zu den Materialeigenschaften finden sich in den Tabellen 1 und 2.

### Beispiel 2

### Herstellung der A-Komponenten

53,7 g einer siliconharzbasierten Grundmasse, bestehend aus 26,85 g eines partiell Vinyldimethylsiloxygruppen funktionalisierten MQ-Harzes mit einem Vinylgehalt von 0,65 mmol/g einem gewichtsmittleren Molekulargewicht M_{w} von ca. 5300 g/mol und einem molaren M/Q-Verhältnis von 42:58 und 26,85 g eines vinyldimethylsiloxy-terminierten Polydimethylsiloxans mit einer Viskosität von 20 000 mPas (25°C) werden mit 46,0 g einer siliconharzbasierten Grundmasse, bestehend aus 23 g eines partiell Vinyldimethylsiloxygruppen funktionalisierten MQ-Harzes mit einem Vinylgehalt von 0,65 mmol/g einem gewichtsmittleren Molekulargewicht M_{w} von ca. 5300 g/mol und einem molaren M/Q-Verhältnis von 42:58 und 23 g eines vinyldimethylsiloxy-terminierten Polydimethylsiloxans mit einer Viskosität von 1 000 mPas (25°C), sowie 0,3 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

### Herstellung der B-Komponente

4,45 g eines vinyldimethylsiloxy-terminierten Polydimethylsiloxans mit einer Viskosität von 100 000 mPas (25°C) werden mit 27,81 g eines vinyldimethylsiloxy-terminierten Polydimethylsiloxans mit einer Viskosität von 1 000 mPas (25°C), 61,3 g eines hydrogendimethylsiloxy-terminierten Polydimethylsiloxans mit einer Viskosität von 1000 mPas (25°C), 6,1 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, sowie 0,14 g einer Inhibitorlösung, bestehend aus Ethinylcyclohexanol gelöst in vinyldimethylsiloxy-terminiertem Polydimethylsiloxan mit einer Viskosität von 1 000 mPas (25°C), und 0,2 g Divinyltetramethyldisiloxan vermischt.

Die Komponenten A und B werden miteinander vermischt, wobei das Mischungsverhältnis von A:B-Komponente 1:1 (nach Gewicht) beträgt, und im weiteren Verlauf wie unter Beispiel 1 beschrieben ausvulkanisiert.

Die Ergebnisse zu den Materialeigenschaften finden sich in den Tabellen 1 und 2.

### Beispiel 3

### Herstellung der A-Komponente

61,7 g einer siliconharzbasierten Grundmasse, bestehend aus 30,85 g eines partiell Vinyldimethylsiloxygruppen funktionalisierten MQ-Harzes mit einem Vinylgehalt von 0,65 mmol/g einem gewichtsmittleren Molekulargewicht M_{w} von ca. 5300 g/mol und einem molaren M/Q-Verhältnis von 42:58 und 30,85 g eines vinyldimethylsiloxy-terminierten Polydimethylsiloxans mit einer Viskosität von 20 000 mPas (25°C) werden mit 30,25 g eines vinyldimethylsiloxy-terminierten Polydimethylsiloxans mit einer Viskosität von 1 000 mPas (25°C), und 0,07 g Divinyltetramethyldisiloxan vermischt. Danach gibt man unter Rühren 4,35 g eines hydrogendimethylsiloxy-terminierten Polydimethylsiloxans mit einer Viskosität von 3,5 mPas (25°C) sowie anschließend 3,63 g eines Trimethylsiloxy-endgestopperten-Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, zu und homogenisiert das Gemisch.

### Herstellung der B-Komponente

99,5 g eines vinyldimethylsiloxy-terminierten Polydimethylsiloxans mit einer Viskosität von 1 000 mPas (25°C) werden 0,5 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

Die Komponenten A und B werden miteinander vermischt, wobei das Mischungsverhältnis von A- zu B-Komponente 9:1 (nach Gewicht) beträgt, und im weiteren Verlauf wie unter Beispiel 1 beschrieben ausvulkanisiert.

Die Ergebnisse zu den Materialeigenschaften finden sich in den Tabellen 1 und 2.

### Beispiel 4

### Herstellung der A-Komponente

52,75 g einer siliconharzbasierten Grundmasse, bestehend aus 26,38 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 26,37 g eines vinyldimethylsiloxy-terminierten Polydimethylsiloxans mit einer Viskosität von 20 000 mPas (25°C) werden mit 24,25 g eines vinyldimethylsiloxy-terminierten Polydimethylsiloxans mit einer Viskosität von 1 000 mPas (25°C) und 0,05 g Divinyltetramethyldisiloxan vermischt. Dann gibt man unter Rühren 19,6 g eines hydrogendimethylsiloxy-terminierten Polydimethylsiloxans mit einer Viskosität von 60 mPas (25°C) sowie 3,35 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, zu und homogenisiert das Gemisch.

### Herstellung der B-Komponente

99,5 g eines vinyldimethylsiloxy-terminierten Polydimethylsiloxans mit einer Viskosität von 1 000 mPas (25°C) werden 0,5 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

Die Komponenten A und B werden miteinander vermischt, wobei das Mischungsverhältnis von A:B-Komponente 9:1 (nach Gewicht) beträgt, und im weiteren Verlauf wie unter Beispiel 1 beschrieben ausvulkanisiert.

Die Ergebnisse zu den Materialeigenschaften finden sich in den Tabellen 1 und 2.

### Beispiel 5

### Herstellung der A-Komponente

79,8 g einer siliconharzbasierten Grundmasse, bestehend aus 39,9 g eines partiell Vinyldimethylsiloxygruppen funktionalisierten MQ-Harzes mit einem Vinylgehalt von 0,65 mmol/g, einem gewichtsmittleren Molekulargewicht M_{W} von ca. 5300 g/mol und einem molaren M/Q-Verhältnis von 42:58 und 39,9 g eines vinyldimethylsiloxy-terminierten Polydimethylsiloxans mit einer Viskosität von 20 000 mPas (25°C) werden mit 20,0 g eines vinyldimethylsiloxy-terminierten Polydimethylsiloxans mit einer Viskosität von 1 000 mPas (25°C), 0,1 g Divinyltetramethyldisiloxan sowie 0,1 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

### Herstellung der B-Komponente:

22,10 g einer siliconharzbasierten Grundmasse, bestehend aus 11,05 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 11,05 g eines vinyldimethylsiloxy-terminierten Polydimethylsiloxans mit einer Viskosität von 20 000 mPas (25°C) werden mit 48,2 g eines vinyldimethylsiloxy-terminierten Polydimethylsiloxans mit einer Viskosität von 1 000 mPas (25°C) vermischt. Anschließend gibt man 6,3 g eines hydrogendimethylsiloxy-terminierten Polydimethylsiloxans mit einer Viskosität von 60 mPas (25°C), 15,8 g eines hydrogendimethylsiloxy-terminierten Polydimethylsiloxans mit einer Viskosität von 1000 mPas (25°C) sowie 7,6 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, zu und homogenisiert das Gemisch.

Die Komponenten A und B werden miteinander vermischt, wobei das Mischungsverhältnis von A:B-Komponente 1:1 (nach Gewicht) beträgt, und im weiteren Verlauf wie unter Beispiel 1 beschrieben ausvulkanisiert.

Die Ergebnisse zu den Materialeigenschaften finden sich in den Tabellen 1 und 2.

### Beispiel 6

### Herstellung der A-Komponente

54,55 g einer Grundmasse, bestehend aus 38,19 g eines vinyldimethylsiloxy-terminierten Polydimethylsiloxans (Viskosität: 20 000 mPas/25°C) und 16,36 g einer hydrophoben pyrogenen Kieselsäure mit einer spezifischen BET-Oberfläche von 300 m²/g sowie einem Kohlenstoffgehalt von 3,9 bis 4,2 Gew.-% (käuflich erhältlich unter der Bezeichnung "HDK^{®} H30" bei Wacker Chemie AG, München) sowie 27,27 g einer siliconharzbasierten Grundmasse, bestehend aus 13,64 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 13,63 g eines vinyldimethylsiloxy-terminierten Polydimethylsiloxans mit einer Viskosität von 20 000 mPas (25°C), werden unter Rühren mit 17,53 g eines vinyldimethylsiloxy-terminierten Polydimethylsiloxans mit einer Viskosität von 1 000 mPas (25°C), 0,55 g Divinyltetramethyldisiloxan und 0,11 g einer Katalysatorlösung mit einem Pt-Gehalt von 1 Gew.-%, welche einen Platin-Divinyltetramethyldisiloxan-Komplex gelöst in Siliconpolymer vinyldimethylsiloxy-terminiertem Polydimethylsiloxan mit einer Viskosität von 1 000 mPas (25°C) enthält, vermischt.

### Herstellung der B-Komponente

54,55 g einer Grundmasse bestehend aus 24,55 g eines vinyldimethylsiloxy-terminierten Polydimethylsiloxans (Viskosität: 1000 mPas/25°C), 15 g eines hydrogendimethylsiloxy-terminierten Polydimethylsiloxans (Viskosität: 1000 mPas/25°C) und 15 g einer hydrophoben pyrogenen Kieselsäure mit einer spezifischen BET-Oberfläche von 300 m²/g sowie einem Kohlenstoffgehalt von 3,9 bis 4,2 Gew.-% (käuflich erhältlich unter der Bezeichnung "HDK^{®} H30" bei Wacker Chemie AG, München), werden mit 27,27 g einer siliconharzbasierten Grundmasse, bestehend aus 13,64 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 13,63 g eines vinyldimethylsiloxy-terminierten Polydimethylsiloxans mit einer Viskosität von 20 000 mPas (25°C), zu einem einheitlich Compound vermischt. Hierzu gibt man unter Rühren 10,91 g eines hydrogendimethylsiloxy-terminierten Polydimethylsiloxans mit einer Viskosität von 75 mPas (25°C) und 3,64 g eines hydrogendimethylsiloxy-terminierten Polydimethylsiloxans mit einer Viskosität von 3,5 mPas (25°C). Abschließend werden 3,64 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, hinzugefügt, und das Gemisch erneut gut homogenisiert.

Die Komponenten A und B werden miteinander vermischt, wobei das Mischungsverhältnis von A- zu B-Komponente 1:1 (nach Gewicht) beträgt, und im weiteren Verlauf wie unter Beispiel 1 beschrieben ausvulkanisiert.

Die Ergebnisse zu den Materialeigenschaften finden sich in den Tabellen 1 und 2.

**Tabelle 1: Materialeigenschaften der unvernetzten Massen**

| Beispiel | Viskosität der A-Komponente [mPas] | Viskosität der B-Komponente [mPas] | Mischviskosität [mPas] |
|---|---|---|---|
| V1 | 5000 | 40 | 3500 |
| V2 | 1000 | 200 | 800 |
| 1 | 42000 | 850 | 3500 |
| 2 | 30000 | 1100 | 3000 |
| 3 | 900 | 1000 | 920 |
| 4 | 1550 | 1000 | 1350 |
| 5 | 4.900 | 800 | 1250 |
| 6 | 55000 | 9800 | 33600 |

**Tabelle 2: Materialeigenschaften der Vulkanisate**

| Beispiel | Shore-A-Härte | Reißfestigkeit [N/mm²] | Reißdehnung [%] |
|---|---|---|---|
| V1 | 45 | 7,0 | 100 |
| V2 | 25 | 1,5 | 100 |
| 1 | .30 | 3,5 | 170 |
| 2 | 30 | 3,7 | 150 |
| 3 | 37 | 4,8 | 210 |
| 4 | 30 | 3,1 | 180 |
| 5 | 38 | 3,8 | 130 |
| 6 | 26 | 3,2 | 310 |

### Beispiel 7

### Qualitative Haftung

Die oben in den Beispielen beschriebenen Zusammensetzungen werden im jeweils angegebenen Mischungsverhältnis von A- zu B-Komponente miteinander gemischt und kurz evakuiert (1 min., 5 mbar), um etwaig eingeschlossene Luft zu entfernen. Die so erhaltenen Reaktivgemische bringt man auf die in Tabelle 3 angegebenen Substrate mit einem Rakel in einer Dicke von etwa 0,5 mm auf, lässt bei Raumtemperatur vulkanisieren und prüft nach der angegebenen Zeit (liegenlassen bei Raumtemperatur und 50 % rel. Feuchte) durch Abschälen qualitativ auf Haftung bzw. Delaminationsneigung. Dazu wird mit einem Messer zwischen Siliconelastomer und Substrat ein ca. 1 cm tiefer Einschnitt gesetzt, wobei dieser möglichst dicht an der Substratoberfläche verläuft. Dann fährt man mit einem Spatel zwischen Substratoberfläche und den eingeschnittenen Teil des Siliconelastomers und prüft mit dem Spatel durch Abscheren des auf dem Substrat anhaftenden Vulkanisatteils auf Güte der Haftung; zudem wird das Bruchbild qualitativ beurteilt (Adhäsionsversagen bzw. Kohäsionsbruch).

**Tabelle 3: Qualitative Haftung nach 1 Tag / 3 Tagen**

| Beispiel | Fensterglas | CERAN^{®}-Glaskeramikplatte | Aluminium | Stahl | Messing |
|---|---|---|---|---|---|
| V1 | -/- | -/- | -/- | -/- | -/- |
| V2 | -/- | -/- | -/- | -/- | -/- |
| 1 | +/+ | +/+ | +/+ | +/+ | -/+ |
| 2 | +/+ | +/+ | +/+ | +/+ | -/+ |
| 3 | +/+ | +/+ | +/+ | +/+ | -/+ |
| 4 | +/+ | +/+ | +/+ | +/+ | -/+ |
| 5 | +/+ | +/+ | +/+ | +/+ | -/+ |
| 6 | +/+ | +/+ | +/+ | +/+ | -/+ |

| | | | | | |
|---|---|---|---|---|---|
| +: gute Haftung; das Vulkanisat lässt sich nur unter Kohäsionsbruch vom Substrat entfernen; -: keine Haftung; das Vulkanisat lässt sich flächig unter Adhäsionsversagen und ohne Kraftaufwand vom Substrat entfernen. | | | | | |

### Beispiel 8

### Quantitative Haftung

Die oben in den Beispielen beschriebenen Zusammensetzungen werden im jeweils angegebenen Mischungsverhältnis von A- zu B-Komponente miteinander gemischt und kurz evakuiert (2 min., 5 mbar), um etwaig eingeschlossene Luft zu entfernen. Die so erhaltenen Reaktivgemische werden sofort danach auf jeweils separate Glasplatten (Fensterglas, 70 mm x 90 mm x 3,0 mm) so aufgetragen, dass sich ein kreisförmiger Klecks mit einem Durchmesser von ca. 15 bis 20 mm ergibt. Anschließend fügt man einen kleinen Aluminiumwürfel (Kantenlänge: 10 mm x 10 mm x 10 mm), dessen zu verklebende Stirnfläche mit einer Grundierung (erhältlich unter dem Namen WACKER^{®} GRUNDIERUNG G790 von der Wacker Chemie AG, München) vorbehandelt wurde, mittels Abstandshalter auf 0,5 mm genau darauf, wobei der Raum zwischen Glas und Würfel komplett mit vernetzbarer Masse ausgefüllt ist, und lässt 7 Tage bei Raumtemperatur vulkanisieren.

Die quantitative Bestimmung der Haftung erfolgt mittels eines sog. Texture Analyser (Modell: TA HDi Texture Analyser, Stable Micro Systems Ltd, Godalming, UK). Hierzu wird der Aluminiumwürfel mit einer definierten Abzugsgeschwindigkeit (2 mm/s) senkrecht von der Glasplatte abgezogen und die zum Trennen des Aluminium/Silicon/Glasverbundes benötigte Kraft gemessen. Zudem erfolgte visuell eine qualitative Beurteilung des Versagensbildes (kohäsiver Bruch im Silicon oder Adhäsionsversagen an einer der Klebeflächen). Die Ergebnisse sind in Tabelle 4 dargestellt.

**Tabelle 4. Quantitative Bestimmung der Haftung auf Glas (adh.: Adhäsionsverlust auf der Glasseite; koh.: Kohäsionsbruch in der Siliconschicht)**

| | **Haftung [N/mm²]** | **Bemerkung** |
|---|---|---|
| Vergleichs-Beispiel 1 | 0,2 | adh. |
| Vergleichs-Beispiel 2 | 0,2 | adh. |
| Beispiel 1 | 2,7 | koh. |
| Beispiel 2 | 2,1 | koh. |
| Beispiel 3 | 1,3 | koh. |
| Beispiel 4 | 2,1 | koh. |
| Beispiel 5 | 2,8 | koh. |
| Beispiel 6 | 2,1 | koh. |

### Beispiel 9

### Zugscherfestigkeit eines Glas/Glas-Verbundes

Die Messung der Zugscherfestigkeit erfolgt in Anlehnung an DIN EN 1465. Die verwendeten Probekörper bestehen aus 2 Glasplättchen (Fensterglas, 85 mm x 25 mm x 3,8 mm), welche über Abstandshalter auf einen planparallelen Abstand von 0,5 mm fixiert und 12 mm überlappend gefügt werden, so dass sich zwischen beiden Glasplättchen eine Klebefläche von 300 mm² ergibt.

Die oben in den Beispielen beschriebenen Zusammensetzungen werden im jeweils angegebenen Mischungsverhältnis von A- zu B-Komponente miteinander gemischt und kurz evakuiert (2 min., 5 mbar), um etwaig eingeschlossene Luft zu entfernen. Anschließend füllt man die so erhaltenen Reaktivgemische mittels Pipette und unter Vermeidung von Lufteinschlüssen in den Zwischenraum zwischen den beiden Glasplättchen.

Abweichend von dieser Vorgehensweise wird bei Beispiel 6 zunächst das Reaktivgemisch einseitig auf das eine der beiden Glasplättchen aufgetragen und dann, nach Applizieren der Abstandshalter, mit dem zweiten Glasplättchen unter Vermeidung etwaiger Lufteinschlüsse so gefügt, dass der Zwischenraum komplett gefüllt ist.

Man lässt 3 Tage bei Raumtemperatur vulkanisieren und prüft nach der angegebenen Zeit quantitativ auf Zugscherfestigkeit (Zugprüfmaschine Zwick UPM 144503, Prüfgeschwindigkeit: 10 mm/min). Die Ergebnisse sind in Tabelle 5 dargestellt. Während die Massen der Beispiele 1 bis 6 ausnahmslos Kohäsionsversagen aufwiesen, führte die Messung bei den Vergleichsbeispielen 1 und 2 zu vollflächigem Adhäsionsversagen.

### Beispiel 10

### Zugscherfestigkeit eines Glas/Aluminium-Verbundes

Die in Beispiel 9 beschriebene Verfahrensweise wird wiederholt mit der Abänderung, dass eines der beiden Glasplättchen gegen ein Aluminiumplättchen gleicher Größe (jedoch nur 1,5 mm Dicke) ersetzt wird. Die Ergebnisse sind in Tabelle 5 dargestellt. Während die Massen der Beispiele 1 bis 6 ausnahmslos Kohäsionsversagen aufwiesen, führte die Messung bei den Vergleichsbeispielen 1 und 2 zu vollflächigem Adhäsionsversagen.

**Tabelle 5: Zugscherfestigkeit von Glas/Glas- bzw. Glas/Aluminium-Verbunden**

| Beispiel | Bemerkung | Glas / Glas | | Glas / Aluminium | |
|---|---|---|---|---|---|
| | | Fₘₐₓ [N] | Zugscherfestigkeit [N/mm²] | Fₘₐₓ [N] | Zugscherfestigkeit [N/mm²] |
| V1 | adh. | 8,3 | 0,03 | 21,7 | 0,07 |
| V2 | adh. | 12,8 | 0,04 | 10,4 | 0,03 |
| 1 | koh. | 378,2 | 1,3 | 397,1 | 1,3 |
| 2 | koh. | 343,9 | 1,2 | 404,4 | 1,4 |
| 3 | koh. | 718,6 | 2,4 | 725,3 | 2,4 |
| 4 | koh. | 449,7 | 1,5 | 467,8 | 1,6 |
| 5 | koh. | 663,1 | 2,2 | 685,5 | 2,3 |
| 6 | koh. | 551,9 | 1,8 | 717,4 | 2,4 |

### Beispiel 11

### Einkapselung von Solarzellen

### Herstellung der A-Komponente

69,34 g einer siliconharzbasierten Grundmasse, bestehend aus 34,67 g eines partiell Vinyldimethylsiloxygruppen funktionalisierten MQ-Harzes mit einem Vinylgehalt von 0,65 mmol/g, einem gewichtsmittleren Molekulargewicht M_{w} von ca. 5300 g/mol und einem molaren M/Q-Verhältnis von 42:58 und 34,67 g eines vinyldimethylsiloxy-terminierten Polydimethylsiloxans mit einer Viskosität von 20 000 mPas (25°C) werden mit 30,52 g eines vinyldimethylsiloxy-terminierten Polydimethylsiloxans mit einer Viskosität von 1 000 mPas (25°C), 0,08 g Divinyltetramethyldisiloxan sowie 0,06 g einer Katalysatorlösung mit einem Pt-Gehalt von 1 Gew.-%, welche einen Platin-Divinyltetramethyldisiloxan-Komplex gelöst in vinyldimethylsiloxy-terminiertem Polydimethylsiloxan mit einer Viskosität von 1 000 mPas (25°C) enthält, vermischt.

### Herstellung der B-Komponente:

15,88 g eines vinyldimethylsiloxy-terminierten Polydimethylsiloxans mit einer Viskosität von 1000 mPas (25°C) werden mit 46,36 g eines hydrogendimethylsiloxy-terminierten Polydimethylsiloxans mit einer Viskosität von 1000 mPas (25°C) und 34,33 g eines hydrogendimethylsiloxy-terminierten Polydimethylsiloxans mit einer Viskosität von 60 mPas (25°C) vermischt. Man gibt 3,43 g eines Trimethylsiloxy-endgestopperten Mischpolymerisats, das aus Dimethylsiloxy- und Methylhydrogensiloxy-Einheiten im Molverhältnis 1:3 besteht, und das eine Viskosität von 40 mPas sowie einen Si-H-Gehalt von 1,1% aufweist, zu und homogenisiert das Gemisch.

Die oben beschriebene Zusammensetzung wird im Mischungsverhältnis 1:1 gemischt und kurz evakuiert (5 min., 15 mbar), um etwaig eingeschlossene Luft zu entfernen. Das so erhaltenen Reaktivgemisch wird nun auf eisenarmes Flachglas, wie es z.B. unter dem Handelsnamen AFG Solatex von der Fa. Interfloat Corporation, Liechtenstein, mit der Abmessung 15 cm x 15 cm und einer Dicke von 0,4 cm, erhältlich ist, ausgegossen und mit einem Rakel vorsichtig über die gesamte Glasfläche verteilt. Gleich im Anschluss legt man in die noch unvulkanisierte Siliconschicht vorsichtig eine handelsübliche, verdrahtete Solarzelle aus polykristallinem Silicium und mit der Abmessung 10 cm x 10 cm so ein, dass etwaig eingeschlossene Luft vollständig entweichen kann und die gesamte Solarzelle komplett von Silicon umspült ist. Danach wird zusätzliches Reaktivgemisch auf der Solarzellenoberfläche ausgegossen und mit einer Rakel verteilt, sowie eine weitere Platte eisenarmes Flachglas (Dimensionen wie oben) aufgelegt, wobei darauf zu achten ist, dass etwaig eingeschlossene Luft beim Auflegen vollständig entweichen kann. Anschließend wurde das Sandwich unter Belastung mit einem Gewicht von 500 g für 1 Tag bei Raumtemperatur vulkanisiert. Abschließend erfolgte eine vergleichende Messung des vom Solarzellenlaminat generierten Stromflusses:
Reine Solarzelle (100 cm²): 100 %
Solarzelle + eisenarmes Glas: 95 %
Solarzelle + Siliconschicht + eisenarmes Glas: 94 %

Die so erhaltene Solarzelle war mittels des Silicons riss- und bruchfrei mit der Glasschicht verklebt. Der Verbund zwischen Glas, Silicon und Solarzelle war völlig transparent (Transparenz der Siliconschicht: ca. 99 %), blasenfrei und von hoher Festigkeit.

### Beispiel 12

### Verbindung zweier optischer Glaskörper

2 Glasstäbe (ca. 100 mm lang, 20 mm Durchmesser) werden über eine spezielle Haltevorrichtung stirnflächig auf einen planparallelen Abstand von 1 mm gebracht.

Die oben in den Beispielen beschriebenen Zusammensetzungen werden im jeweils angegebenen Mischungsverhältnis von A- zu B-Komponente miteinander gemischt und kurz evakuiert (1 min., 5 mbar), um etwaig eingeschlossene Luft zu entfernen. Anschließend füllt man die so erhaltenen Reaktivgemische mittels Pipette und unter Vermeidung von Lufteinschlüssen in den Zwischenraum zwischen den Stirnflächen der Glasstäbe (die Kapillarwirkung führt zu einen vollflächigen Benetzung und zum vollständigen Füllen des Spaltes).

Abweichend von dieser Vorgehensweise wird bei der Zusammensetzung gemäß Beispiel 6 das Reaktivgemisch zunächst auf die Stirnfläche eines der beiden zu fügenden Glasstäbe aufgetragen und erst danach mit den zweiten Glasstab auf 1 mm planparallelen Abstand und unter Vermeidung etwaiger Lufteinschlüsse gefügt.

Nach Vulkanisation der Massen (7 Tage bei Raumtemperatur) wird versucht, die flächig miteinander verklebten Glasstäbe voneinander zu trennen. Das Ergebnis gibt Tabelle 6 wieder.

**Tabelle 6: Güte der Verklebung bei stirnflächig gefügten Glasstäben.**

| | | | |
|---|---|---|---|
| **Vergleichsbeispiel 1** | neg. | **Beispiel 3** | pos. |
| **Vergleichsbeispiel 2** | neg. | **Beispiel 4** | pos. |
| **Beispiel 1** | pos. | **Beispiel 5** | pos. |
| **Beispiel 2** | pos. | **Beispiel 6** | pos. |

| | | | |
|---|---|---|---|
| **pos.:** die stirnflächig miteinander verklebten Glasstäbe lassen sich nur unter kohäsivem Bruch in der Siliconschicht voneinander trennen. **neg.:** die stirnflächig miteinander verklebten Glasstäbe lassen sich ohne größeren Kraftaufwand voneinander trennen (Adhäsionsversagen auf der Glasseite). | | | |

## Patentansprüche

1. Zu Elastomeren vernetzbare Siliconzusammensetzungen enthaltend
(1) Organosiliciumverbindungen, die SiC-gebundene Reste mit aliphatischen Kohlenstoff-Kohlenstoff-Mehrfachbindungen aufweisen, enthaltend Einheiten der Formel
RₐR¹_{b}SiO_{(4-a-b)/2} (I)
,
wobei
R gleich oder verschieden sein kann und gegebenenfalls substituierter, SiC-gebundener, aliphatisch gesättigter Kohlenwasserstoffrest bedeutet,
R¹ gleich oder verschieden sein kann und gegebenenfalls substituierter, SiC-gebundener, aliphatisch ungesättigter Kohlenwasserstoffrest bedeutet,
a 0, 1, 2 oder 3 ist und
b 0, 1, 2 oder 3 ist,
mit der Maßgabe, dass die Summe a+b kleiner oder gleich 3 beträgt und mindestens zwei Reste R¹ pro Molekül vorhanden sind,
(2) Organopolysiloxane mit Si-gebundenen Wasserstoffatomen enthaltend Einheiten der Formel
R²_{c}H_{d}SiO_{(4-c-d)/2} (II)
,
wobei
R² gleich oder verschieden sein kann und eine oben für R angegebene Bedeutung hat,
c 0, 1, 2 oder 3 ist und
d 0, 1 oder 2 ist,
mit der Maßgabe, dass die Summe von c+d kleiner oder gleich 3 ist und durchschnittlich mindestens drei Einheiten der Formel (II) mit c=d=1 je Molekül vorliegen, wobei der Gehalt an Si-gebundenem Wasserstoff größer oder gleich 0,7 Gew.-% ist,
(3) im Wesentlichen lineare Organopolysiloxane mit endständig Si-gebundenen Wasserstoffatomen und
(4) die Anlagerung von Si-gebundenem Wasserstoff an aliphatische Mehrfachbindung fördernden Katalysator,
mit der Maßgabe, dass das molare Verhältnis von Si-gebundenem Wasserstoff stammend aus Komponente (3) und bezogen auf 100 Gewichtsteile Zusammensetzung, zur Summe des Si-gebundenen Wasserstoffes stammend aus den Komponenten (2) und (3), jeweils bezogen auf 100 Gewichtsteile Zusammensetzung, zwischen 0,05 und 1 liegt.

2. Zusammensetzungen gemäß Anspruch 1, **dadurch gekennzeichnet, dass** es sich bei Komponente (1) um im Wesentlichen lineare Siloxane im Gemisch mit Organopolysiloxanharz handelt.

3. Zusammensetzungen gemäß Anspruch 1 oder 2, **dadurch gekennzeichnet, dass** es sich bei Komponente (2) um lineare Siloxane oder um cyclische Siloxane handelt.

4. Zusammensetzungen gemäß einem oder mehreren der Ansprüche 1 bis 3, **dadurch gekennzeichnet, dass** es sich bei Organopolysiloxanen (3) um solche der Formel
R³₂HSiO(SiR³₂O)pSiR³₂H (III)
handelt, wobei
R³ gleich oder verschieden sein kann und gegebenenfalls substituierter, SiC-gebundener, aliphatisch gesättigter Kohlenwasserstoffrest bedeutet und
p 0 oder eine ganze Zahl von 1 bis 250 ist.

5. Zusammensetzungen gemäß einem oder mehreren der Ansprüche 1 bis 4, **dadurch gekennzeichnet, dass** das Verhältnis der Gewichtsanteile der Komponente (3) zur Komponente (2) zwischen 60:1 und 0,3:1 liegt.

6. Zusammensetzungen gemäß einem oder mehreren der Ansprüche 1 bis 5, **dadurch gekennzeichnet, dass** das Molverhältnis der gesamten SiH-Gruppen in den Komponenten (2) und (3) zu Si-gebundenen Resten mit aliphatischer Kohlenstoff-Kohlenstoff-Mehrfachbindung der Komponente (1) 1,0 bis 5 ist.

7. Verfahren zur Herstellung der Zusammensetzung gemäß einem oder mehreren der Ansprüche 1 bis 6 durch Mischen der einzelnen Komponenten in beliebiger Reihenfolge.

8. Formkörper, hergestellt durch Vernetzung der Zusammensetzungen gemäß einem oder mehreren der Ansprüche 1 bis 6 oder hergestellt gemäß Anspruch 7.

9. Formkörper gemäß Anspruch 8, **dadurch gekennzeichnet, dass** es sich um Materialverbunde handelt, bei denen mindestens ein Teil des Verbundes aus einem Siliconelastomer besteht, das aus den Siliconzusammensetzungen gemäß einem oder mehreren der Ansprüche 1 bis 6 oder hergestellt gemäß Anspruch 7 hergestellt wird, das mit wenigstens einem Substratmaterial fest verbunden ist.

10. Verfahren zur Herstellung von Materialverbunden, bei denen die Siliconzusammensetzung gemäß einem oder mehreren der Ansprüche 1 bis 6 oder hergestellt gemäß Anspruch 7 auf mindestens ein Substrat aufgebracht und anschließend vernetzen gelassen wird.

## Claims

1. Silicone compositions which can be crosslinked to form elastomers and comprise
(1) organosilicon compounds which have SiC-bonded radicals having aliphatic carbon-carbon multiple bonds and comprise units of the formula
RₐR¹_{b}SiO_{(4-a-b)/2} (I)
,
where
the radicals R can be identical or different and are each an optionally substituted, SiC-bonded, aliphatically saturated hydrocarbon radical,
the radicals R¹ can be identical or different and are each an optionally substituted, SiC-bonded, aliphatically unsaturated hydrocarbon radical,
a is 0, 1, 2 or 3 and
b is 0, 1, 2 or 3,
with the proviso that the sum a+b is less than or equal to 3 and at least two radicals R¹ are present per molecule,
(2) organopolysiloxanes which have Si-bonded hydrogen atoms and comprise units of the formula
R²_{c}H_{d}SiO_{(4-c-d)/2} (II)
,
where
the radicals R² can be identical or different and each have one of the meanings given above for R,
c is 0, 1, 2 or 3 and
d is 0, 1 or 2,
with the proviso that the sum c+d is less than or equal to 3 and there are on average at least three units of the formula (II) with c=d=1 present per molecule, where the content of Si-bonded hydrogen is greater than or equal to 0.7% by weight,
(3) essentially linear organopolysiloxanes having terminally Si-bonded hydrogen atoms and
(4) a catalyst which promotes the addition of Si-bonded hydrogen onto aliphatic multiple bonds,
with the proviso that the molar ratio of Si-bonded hydrogen originating from component (3) and based on 100 parts by weight of composition to the sum of the Si-bonded hydrogen originating from the components (2) and (3), in each case based on 100 parts by weight of composition, is in the range from 0.05 to 1.

2. Compositions according to Claim 1, **characterized in that** component (1) comprises essentially linear siloxanes in a mixture with organopolysiloxane resin.

3. Compositions according to Claim 1 or 2, **characterized in that** component (2) comprises linear siloxanes or cyclic siloxanes.

4. Compositions according to one or more of Claims 1 to 3, **characterized in that** organopolysiloxanes (3) are ones of the formula
R³₂HSiO(SiR³₂O)ₚSiR³₂H (III)
where
the radicals R³ can be identical or different and are each an optionally substituted, SiC-bonded, aliphatically saturated hydrocarbon radical and
p is 0 or an integer from 1 to 250.

5. Compositions according to one or more of Claims 1 to 4, **characterized in that** the ratio of the proportions by weight of the component (3) to the component (2) is in the range from 60:1 to 0.3:1.

6. Compositions according to one or more of Claims 1 to 5, **characterized in that** the molar ratio of the total SiH groups in the components (2) and (3) to Si-bonded radicals having an aliphatic carbon-carbon multiple bond of the component (1) is from 1.0 to 5.

7. Process for producing the composition according to one or more of Claims 1 to 6 by mixing the individual components in any order.

8. Molding produced by crosslinking the composition according to one or more of Claims 1 to 6 or produced according to Claim 7.

9. Molding according to Claim 8, **characterized in that** it is a material composite in which at least part of the composite consists of a silicone elastomer which has been produced from the silicone compositions according to one or more of Claims 1 to 6 or produced according to Claim 7 and is firmly joined to at least one substrate material.

10. Process for producing material composites in which the silicone composition according to one or more of Claims 1 to 6 or produced according to Claim 7 is applied to at least one substrate and subsequently allowed to crosslink.

## Revendications

1. Compositions de silicone réticulables en élastomères, contenant
(1) des composés organosiliciés qui comportent des radicaux à liaisons multiples carbone-carbone aliphatiques, liés par une liaison SiC, contenant des motifs de formule
RₐR¹_{b}SiO_{(4-a-b)/2} (I)
dans laquelle
R peut être le même ou différent et représente un radical hydrocarboné à saturation aliphatique éventuellement substitué, lié par une liaison SiC,
R¹ peut être le même ou différent et représente un radical hydrocarboné à insaturation aliphatique éventuellement substitué, lié par une liaison SiC,
a est 0, 1, 2 ou 3 et
b est 0, 1, 2 ou 3,
étant entendu que la somme a+b est inférieure ou égale à 3 et qu'au moins deux radicaux R¹ sont présents par molécule,
(2) des organopolysiloxanes comportant des motifs contenant des atomes d'hydrogène liés à Si, de formule
R²_{c}H_{d}SiO_{(4-c-d)/2} (II)
dans laquelle
R² peut être le même ou différent et a une signification indiquée plus haut pour R,
c est 0, 1, 2 ou 3 et
d est 0, 1 ou 2,
étant entendu que la somme de c+d est inférieure ou égale à 3 et en moyenne au moins trois motifs de formule (II) où c=d=1 sont présents par molécule, la teneur en hydrogène lié à Si étant supérieure ou égale à 0,7 % en poids,
(3) des organopolysiloxanes essentiellement linéaires comportant des atomes d'hydrogène en bout de chaîne liés à Si et
(4) un catalyseur favorisant la fixation par addition d'hydrogène lié à Si sur une liaison multiple aliphatique,
étant entendu que le rapport molaire d'hydrogène lié à Si, provenant du composant (3) et pour 100 parties en poids de la composition, à la somme de l'hydrogène lié à Si, provenant des composants (2) et (3), chaque fois pour 100 parties en poids de la composition, est compris entre 0,05 et 1.

2. Compositions selon la revendication 1, **caractérisée en ce que** pour ce qui est du composant (1) il s'agit de siloxanes essentiellement linéaires en mélange avec une résine organopolysiloxane.

3. Compositions selon la revendication 1 ou 2, **caractérisée en ce que** pour ce qui est du composant (2) il s'agit de siloxanes linéaires ou de siloxanes cycliques.

4. Compositions selon une ou plusieurs des revendications 1 à 3, **caractérisées en ce que** pour ce qui est des organopolysiloxanes (3) il s'agit de ceux de formule
R³₂HSiO (SiR³₂O)ₚSiR³₂H (III)
,
dans laquelle
R³ peut être le même ou différent et représente un radical hydrocarboné à saturation aliphatique éventuellement substitué, lié par une liaison SiC, et p est 0 ou un nombre entier valant de 1 à 250.

5. Compositions selon une ou plusieurs des revendications 1 à 4, **caractérisées en ce que** le rapport des parties en poids du composant (3) au composant (2) est compris entre 60:1 et 0,3:1.

6. Compositions selon une ou plusieurs des revendications 1 à 5, **caractérisées en ce que** le rapport molaire de la totalité des groupes SiH dans les composants (2) et (3) aux radicaux liés à Si, à liaison multiple carbone-carbone aliphatique, du composant (1) vaut de 1,0 à 5.

7. Procédé pour la préparation de la composition selon une ou plusieurs des revendications 1 à 6, par mélange des composants individuels en un ordre quelconque.

8. Corps moulés, produits par réticulation des compositions selon une ou plusieurs des revendications 1 à 6 ou préparées selon la revendication 7.

9. Corps moulés selon la revendication 8, **caractérisé en ce qu'**il s'agit de composites de matériaux dans lesquels au moins une partie du composite consiste en un élastomère silicone qui est produit à partir des compositions de silicone selon une ou plusieurs des revendications 1 à 6 ou préparées selon la revendication 7, qui est assemblé solidement avec au moins un matériau de support.

10. Procédé pour la production de composites de matériaux, dans lequel on applique sur au moins un support la composition de silicone selon une ou plusieurs des revendications 1 à 6 ou préparée selon la revendication 7 et ensuite on la fait réticuler.
